# EUROPÄISCHE PATENTSCHRIFT

(11) **EP 2 397 271 B1**
(45) Veröffentlichungstag und Bekanntmachung des Hinweises auf die Patenterteilung: **08.08.2018**
(21) Anmeldenummer: 11166026.2
(22) Anmeldetag: 13.05.2011
(51) Int. Cl.: B25C 1/06

(54) **Eintreibvorrichtung**
Driving device
Dispositif d'enfoncement

(30) Priorität: 15.06.2010 DE 102010030077
(43) Veröffentlichungstag der Anmeldung: 21.12.2011
(73) Patentinhaber: HILTI Aktiengesellschaft, 9494 Schaan (LI)
(72) Erfinder: Spasov, Robert, 9494, Schaan (LI); Bertsch, Klaus, 6820, Frastanz (AT); Franz, Karl, 6800, Feldkirch (AT)
(74) Vertreter: Hilti Aktiengesellschaft Corporate Intellectual Property

(56) Entgegenhaltungen:
- EP-A1- 2 177 321
- EP-A2- 0 172 423
- DE-A1-102006 050 841

## Beschreibung

### Technisches Gebiet

Die Anmeldung betrifft eine Vorrichtung zum Eintreiben eines Befestigungselementes in einen Untergrund.

### Stand der Technik

Derartige Vorrichtungen weisen üblicherweise einen Kolben zur Übertragung von Energie auf das Befestigungselement auf. Die dazu erforderliche Energie muss dabei in sehr kurzer Zeit zur Verfügung gestellt werden, weshalb beispielsweise bei sogenannten Federnaglern zunächst eine Feder gespannt wird, welche während des Eintreibvorgangs die Spannenergie schlagartig an den Kolben abgibt und diesen auf das Befestigungselement zu beschleunigt.

Die Energie, mit der das Befestigungselement in den Untergrund eingetrieben wird, ist bei derartigen Vorrichtungen nach oben begrenzt, so dass die Vorrichtungen nicht beliebig für alle Befestigungselemente und jeden Untergrund einsetzbar sind. Es ist daher wünschenswert, Eintreibvorrichtungen zur Verfügung zu stellen, welche ausreichend Energie auf ein Befestigungselement übertragen können.

In der EP 2 177 321 A1 ist ein handgeführtes Eintreibgerät für Befestigungselemente beschrieben, welches ein Antriebsfederelement, einen damit antreibbaren Eintreibstössel, eine Spanneinrichtung für das Antriebsfederelement sowie eine Sperreinrichtung aufweist. Zwischen einem axial beweglichen Spannelement der Spanneinrichtung und einem Kupplungs- und Sperrteil der Sperreinrichtung ist ein Freilauf angeordnet, welcher ein Drehmoment des Spannelements auf das Kupplungs- und Sperrteil übertragen kann.

### Darstellung der Erfindung

Gemäss einem Aspekt der Anmeldung weist eine Vorrichtung zum Eintreiben eines Befestigungselementes in einen Untergrund ein Energieübertragungselement zur Übertragung von Energie auf das Befestigungselement auf. Bevorzugt ist das Energieübertragungselement zwischen einer Ausgangsstellung und einer Setzstellung bewegbar, wobei sich das Energieübertragungselement vor einem Eintreibvorgang in der Ausgangsstellung und nach dem Eintreibvorgang in der Setzstellung befindet.

Gemäss einem Aspekt der Anmeldung umfasst die Vorrichtung einen mechanischen Energiespeicher zur Speicherung von mechanischer Energie. Das Energieübertragungselement eignet sich dann bevorzugt zur Übertragung von Energie aus dem mechanischen Energiespeicher auf das Befestigungselement.

Gemäss einem Aspekt der Anmeldung umfasst die Vorrichtung eine Energieübertragungseinrichtung zur Übertragung von Energie aus einer Energiequelle auf den mechanischen Energiespeicher. Bevorzugt wird die Energie für einen Eintreibvorgang in dem mechanischen Energiespeicher zwischengespeichert, um schlagartig an das Befestigungselement abgegeben zu werden. Bevorzugt eignet sich die Energieübertragungseinrichtung zur Beförderung des Energieübertragungselementes von der Setzstellung in die Ausgangsstellung. Bevorzugt ist die Energiequelle ein insbesondere elektrischer Energiespeicher, besonders bevorzugt eine Batterie oder ein Akku. Bevorzugt weist die Vorrichtung die Energiequelle auf.

Gemäss einem Aspekt der Anmeldung eignet sich die Energieübertragungseinrichtung dazu, das Energieübertragungselement von der Setzstellung in Richtung zur Ausgangsstellung zu befördern, ohne Energie auf den mechanischen Energiespeicher zu übertragen. Hierdurch wird ermöglicht, dass das der mechanische Energiespeicher Energie aufnehmen und/oder abgeben kann, ohne das Energieübertragungselement in die Setzstellung zu bewegen. Der Energiespeicher kann also entladen werden, ohne dass ein Befestigungselement aus der Vorrichtung getrieben wird.

Gemäss einem Aspekt der Anmeldung eignet sich die Energieübertragungseinrichtung dazu, Energie auf den mechanischen Energiespeicher zu übertragen, ohne das Energieübertragungselement zu bewegen.

Gemäss einem Aspekt der Anmeldung umfasst die Energieübertragungseinrichtung eine Kraftübertragungseinrichtung zur Übertragung einer Kraft von dem Energiespeicher auf das Energieübertragungselement und/oder zur Übertragung einer Kraft von der Energieübertragungseinrichtung auf den mechanischen Energiespeicher.

Gemäss einem Aspekt der Anmeldung umfasst die Energieübertragungseinrichtung ein Mitnahmeelement, welches zum Bewegen des Energieübertragungselementes von der Setzstellung in die Ausgangsstellung mit dem Energieübertragungselement in Eingriff bringbar ist.

Bevorzugt lässt das Mitnahmeelement eine Bewegung des Energieübertragungselementes von der Ausgangsstellung in die Setzstellung zu. Insbesondere liegt das Mitnahmeelement nur an dem Energieübertragungselement an, so dass das Mitnahmeelement das Energieübertragungselement nur in eine von zwei entgegen gesetzten Bewegungsrichtungen mitnimmt.

Bevorzugt weist das Mitnahmeelement einen Längskörper, insbesondere eine Stange auf.

Gemäss einem Aspekt der Anmeldung umfasst die Energieübertragungseinrichtung einen linear bewegbaren Linearabtrieb, welcher das Mitnahmeelement umfasst und mit der Kraftübertragungseinrichtung verbunden ist.

Gemäss einem Aspekt der Anmeldung umfasst die Vorrichtung einen Motor mit einem Motorabtrieb, wobei die Energieübertragungseinrichtung einen Bewegungsumwandler zur Umwandlung einer Drehbewegung in eine Linearbewegung mit einem von dem Motor antreibbaren Drehantrieb und dem Linearabtrieb und eine Drehmomentübertragungseinrichtung zur Übertragung eines Drehmomentes von dem Motorabtrieb auf den Drehantrieb umfasst.

Bevorzugt umfasst der Bewegungsumwandler einen Spindeltrieb mit einer Spindel und einer auf der Spindel angeordneten Spindelmutter. Gemäss einer besonders bevorzugten Ausführungsform bildet die Spindel den Drehantrieb und die Spindelmutter den Linearabtrieb. Gemäss einer weiteren besonders bevorzugten Ausführungsform bildet die Spindelmutter den Drehantrieb und die Spindel den Linearabtrieb.

Gemäss einem Aspekt der Anmeldung ist der Linearabtrieb gegenüber dem Drehantrieb mittels des Mitnahmeelementes verdrehgesichert angeordnet, indem insbesondere das Mitnahmeelement in einer Mitnahmeelementführung geführt ist.

Gemäss einem Aspekt der Anmeldung umfasst die Energieübertragungseinrichtung eine Drehmomentübertragungseinrichtung zur Übertragung eines Drehmomentes von dem Motorabtrieb auf den Drehantrieb und eine Kraftübertragungseinrichtung zur Übertragung einer Kraft von dem Linearabtrieb auf den Energiespeicher.

Bevorzugt ist der mechanische Energiespeicher dazu vorgesehen, potentielle Energie zu speichern. Besonders bevorzugt umfasst der mechanische Energiespeicher eine Feder, insbesondere Schraubenfeder.

Bevorzugt ist der mechanische Energiespeicher dazu vorgesehen, Rotationsenergie zu speichern. Besonders bevorzugt umfasst der mechanische Energiespeicher ein Schwungrad.

Besonders bevorzugt sind zwei insbesondere einander gegenüberliegende Enden der Feder bewegbar, um die Feder zu spannen.

Besonders bevorzugt umfasst die Feder zwei voneinander beabstandete und insbesondere gegenseitig abgestützte Federelemente.

Gemäss einem Aspekt der Anmeldung umfasst die Energieübertragungseinrichtung eine Energieeinspeiseeinrichtung zur Übertragung von Energie aus einer Energiequelle auf den mechanischen Energiespeicher und eine von der Energieeinspeiseeinrichtung getrennte und insbesondere unabhängig arbeitende Rückholeinrichtung zur Beförderung des Energieübertragungselementes von der Setzstellung in die Ausgangsstellung.

Gemäss einem Aspekt der Anmeldung umfasst die Vorrichtung eine Kupplungseinrichtung zum vorübergehenden Halten des Energieübertragungselementes in der Ausgangsstellung. Bevorzugt eignet sich die Kupplungseinrichtung zum vorübergehenden Halten des Energieübertragungselementes nur in der Ausgangsstellung.

Gemäss einem Aspekt der Anmeldung umfasst die Vorrichtung eine Energieübertragungseinrichtung mit einem linear bewegbaren Linearabtrieb zur Beförderung des Energieübertragungselementes von der Setzstellung in die Ausgangsstellung auf die Kupplungseinrichtung zu.

Gemäss einem Aspekt der Anmeldung auf der Setzachse oder im Wesentlichen symmetrisch um die Setzachse angeordnet.

Gemäss einem Aspekt der Anmeldung sind das Energieübertragungselement und der Linearabtrieb gegenüber der Kupplungseinrichtung insbesondere in Richtung der Setzachse verschiebbar angeordnet.

Gemäss einem Aspekt der Anmeldung umfasst die Vorrichtung ein Gehäuse, in welchem das Energieübertragungselement, die Kupplungseinrichtung und die Energieübertragungseinrichtung aufgenommen sind, wobei die Kupplungseinrichtung an dem Gehäuse befestigt ist. Hierdurch ist sichergestellt, dass insbesondere empfindliche Teile der Kupplungseinrichtung nicht den gleichen Beschleunigungskräften ausgesetzt sind wie beispielsweise das Energieübertragungselement.

Gemäss einem Aspekt der Anmeldung umfasst die Feder zwei voneinander beabstandete und insbesondere gegenseitig abgestützte Federelemente, wobei die Kupplungseinrichtung zwischen den zwei voneinander beabstandeten Federelementen angeordnet ist.

Gemäss einem Aspekt der Anmeldung umfasst die Kupplungseinrichtung ein quer zur Setzachse bewegbares Verriegelungselement. Bevorzugt ist das Verriegelungselement kugelförmig. Bevorzugt weist das Verriegelungselement ein Metall und/oder eine Legierung auf.

Gemäss einem Aspekt der Anmeldung umfasst die Kupplungseinrichtung eine entlang der Setzachse ausgerichtete Innenhülse mit einer quer zur Setzachse verlaufenden Aussparung für eine Aufnahme des Verriegelungselementes und eine die Innenhülse umgreifende Aussenhülse mit einer Stützfläche für eine Abstützung des Verriegelungselementes. Bevorzugt ist die Stützfläche gegenüber der Setzachse um einen spitzen Winkel geneigt.

Gemäss einem Aspekt der Anmeldung ist der Linearabtrieb gegenüber dem Energieübertragungselement insbesondere in Richtung der Setzachse verschiebbar angeordnet.

Gemäss einem Aspekt der Anmeldung umfasst die Kupplungseinrichtung weiterhin eine die Aussenhülse mit einer Kraft in Richtung der Setzachse beaufschlagende Rückstellfeder.

Gemäss einem Aspekt der Anmeldung umfasst die Vorrichtung ein Halteelement, wobei das Halteelement in einer Sperrstellung des Halteelementes die Aussenhülse gegen die Kraft der Rückstellfeder hält, und wobei das Halteelement in einer Freigabestellung des Halteelementes eine Bewegung der Aussenhülse aufgrund der Kraft der Rückstellfeder freigibt.

Bevorzugt besteht das Energieübertragungselement aus einem starren Körper besteht.

Bevorzugt weist das Energieübertragungselement eine Kupplungsausnehmung zur Aufnahme des Verriegelungselementes auf.

Gemäss einem Aspekt der Anmeldung weist das Energieübertragungselement eine Ausnehmung auf, wobei sich die Kraftübertragungseinrichtung in die Ausnehmung hinein erstreckt, insbesondere sowohl in der Ausgangsstellung des Energieübertragungselementes als auch in der Setzstellung des Energieübertragungselementes.

Gemäss einem Aspekt der Anmeldung ist die Ausnehmung als Durchbruch ausgebildet und die Kraftübertragungseinrichtung erstreckt sich durch den Durchbruch hindurch, insbesondere sowohl in der Ausgangsstellung des Energieübertragungselementes als auch in der Setzstellung des Energieübertragungselementes.

Gemäss einem Aspekt der Anmeldung umfasst die Kraftübertragungseinrichtung einen Kraftumlenker zur Umlenkung der Richtung einer von der Kraftübertragungseinrichtung übertragenen Kraft. Bevorzugt erstreckt sich der Kraftumlenker in die Ausnehmung hinein oder durch den Durchbruch hindurch, insbesondere sowohl in der Ausgangsstellung des Energieübertragungselementes als auch in der Setzstellung des Energieübertragungselementes. Bevorzugt ist der Kraftumlenker relativ zu dem mechanischen Energiespeicher und/oder relativ zu dem Energieübertragungselement bewegbar angeordnet.

Gemäss einem Aspekt der Anmeldung umfasst die Vorrichtung eine Kupplungseinrichtung zum vorübergehenden Festhalten des Energieübertragungselementes in der Ausgangsstellung und einen Zuganker zur Übertragung einer Zugkraft von der Energieübertragungseinrichtung, insbesondere dem Linearabtrieb und/oder dem Drehantrieb auf die Kupplungseinrichtung.

Gemäss einem Aspekt der Anmeldung umfasst der Zuganker ein fest mit der Kupplungseinrichtung verbundenes Drehlager und ein fest mit dem Drehantrieb verbundenes und in dem Drehlager drehbar gelagertes Drehteil.

Gemäss einem Aspekt der Anmeldung umfasst der Kraftumlenker ein Band.

Gemäss einem Aspekt der Anmeldung umfasst der Kraftumlenker ein Seil.

Gemäss einem Aspekt der Anmeldung umfasst der Kraftumlenker eine Kette.

Gemäss einem Aspekt der Anmeldung umfasst das Energieübertragungselement weiterhin ein Kupplungssteckteil zur vorübergehenden Kopplung an eine Kupplungseinrichtung.

Gemäss einem Aspekt der Anmeldung umfasst das Kupplungssteckteil eine Kupplungsausnehmung zur Aufnahme eines Verriegelungselementes der Kupplungseinrichtung.

Gemäss einem Aspekt der Anmeldung umfasst das Energieübertragungselement einen insbesondere dem Befestigungselement zugewandten Schaft. Bevorzugt weist der Schaft einen konvexkonischen Schaftabschnitt auf.

Gemäss einem Aspekt der Anmeldung ist die Ausnehmung, insbesondere der Durchbruch, zwischen dem Kupplungssteckteil und dem Schaft angeordnet.

Gemäss einem Aspekt der Anmeldung beaufschlagen sich die Kraftübertragungseinrichtung, insbesondere der Kraftumlenker, und die Energieübertragungseinrichtung, insbesondere der Linearabtrieb, gegenseitig mit einer Kraft, während das Energieübertragungselement Energie auf das Befestigungselement überträgt.

Gemäss einem Aspekt der Anmeldung umfasst die Energieübertragungseinrichtung einen Bewegungsumwandler zur Umwandlung einer Drehbewegung in eine Linearbewegung mit einem Drehantrieb und einem Linearabtrieb und eine Kraftübertragungseinrichtung zur Übertragung einer Kraft von dem Linearabtrieb auf den Energiespeicher.

Gemäss einem Aspekt der Anmeldung ist die Kraftübertragungseinrichtung, insbesondere der Kraftumlenker, insbesondere das Band an der Energieübertragungseinrichtung, insbesondere dem Linearabtrieb befestigt.

Gemäss einem Aspekt der Anmeldung umfasst die Energieübertragungseinrichtung, insbesondere der Linearabtrieb eine Durchführung, wobei die Kraftübertragungseinrichtung, insbesondere der Kraftumlenker, insbesondere das Band durch die Durchführung hindurch geführt ist und an einem Riegelelement festgelegt ist, welches zusammen mit der Kraftübertragungseinrichtung, insbesondere dem Kraftumlenker, insbesondere dem Band eine Ausdehnung quer zu der Durchführung aufweist, die die Abmessungen der Durchführung quer zu der Durchführung übersteigt. Bevorzugt ist das Riegelelement als Stift ausgebildet. Gemäss einer weiteren Ausführungsform ist das Riegelelement als Ring ausgebildet.

Gemäss einem Aspekt der Anmeldung umgreift die Kraftübertragungseinrichtung, insbesondere der Kraftumlenker, insbesondere das Band das Riegelelement.

Gemäss einem Aspekt der Anmeldung umfasst die Kraftübertragungseinrichtung, insbesondere der Kraftumlenker, insbesondere das Band ein Dämpfungselement. Bevorzugt ist das Dämpfungselement zwischen dem Riegelelement und dem Linearabtrieb angeordnet.

Gemäss einem Aspekt der Anmeldung umfasst der Linearabtrieb ein Dämpfungselement.

Gemäss einem Aspekt der Anmeldung umfasst das Band eine mit Verstärkungsfasern durchsetzte Kunststoffmatrix. Bevorzugt umfasst die Kunststoffmatrix ein Elastomer. Bevorzugt umfassen die Verstärkungsfasern eine Litze.

Gemäss einem Aspekt der Anmeldung umfasst das Band ein Gewebe oder Gelege von Gewebe- oder Gelegefasern. Bevorzugt umfassen die Gewebe- oder Gelegefasern Kunststofffasern.

Gemäss einem Aspekt der Anmeldung umfasst das Gewebe oder Gelege Verstärkungsfasern, welche sich von den Gewebe- oder Gelegefasern unterscheiden.

Bevorzugt umfassen die Verstärkungsfasern Glasfasern, Kohlefasern, Polyamidfasern, insbesondere Aramidfasern, Metallfasern, insbesondere Stahlfasern, Keramikfasern, Basaltfasern, Borfasern, Polyethylenfasern, insbesondere Hochleistungspolyethylenfasern (HPPE-Fasern), Fasern aus flüssigkristallinen Polymeren, insbesondere Polyestern, oder Mischungen davon.

Gemäss einem Aspekt der Anmeldung umfasst die Vorrichtung ein Verzögerungselement zum Verzögern des Energieübertragungselementes. Bevorzugt weist das Verzögerungselement eine Anschlagfläche für das Energieübertragungselement auf.

Gemäss einem Aspekt der Anmeldung umfasst die Vorrichtung ein Aufnahmeelement zum Aufnehmen des Verzögerungselementes. Bevorzugt umfasst das Aufnahmeelement eine erste Stützwand zur axialen Abstützung des Verzögerungselementes und eine zweite Stützwand zur radialen Abstützung des Verzögerungselementes. Bevorzugt umfasst das Aufnahmeelement ein Metall und/oder eine Legierung.

Gemäss einem Aspekt der Anmeldung umfasst das Gehäuse einen Kunststoff auf und das Aufnahmeelement ist nur über das Gehäuse an der Antriebseinrichtung befestigt.

Gemäss einem Aspekt der Anmeldung umfasst das Gehäuse eine oder mehrere erste Verstärkungsrippen.

Bevorzugt ist die erste Verstärkungsrippe geeignet, eine von dem Verzögerungselement auf das Aufnahmeelement einwirkende Kraft auf die Antriebseinrichtung zu übertragen.

Gemäss einem Aspekt der Anmeldung weist das Verzögerungselement in Richtung der Setzachse eine grössere Ausdehnung auf als das Aufnahmeelement.

Gemäss einem Aspekt der Anmeldung umfasst die Vorrichtung einen sich an das Aufnahmeelement anschliessenden Führungskanal für eine Führung des Befestigungselementes. Bevorzugt ist der Führungskanal in einer Führungsschiene verschiebbar angeordnet. Gemäss einem Aspekt der Anmeldung ist der Führungskanal oder die Führungsschiene mit dem Aufnahmeelement fest, insbesondere monolithisch verbunden.

Gemäss einem Aspekt der Anmeldung ist das Aufnahmeelement mit dem Gehäuse, insbesondere mit der ersten Verstärkungsrippe fest verbunden, insbesondere verschraubt.

Gemäss einem Aspekt der Anmeldung ist das Aufnahmeelement an dem Gehäuse in Setzrichtung abgestützt.

Gemäss einem Aspekt der Anmeldung umfasst das Gehäuse ein Tragelement, welches in das Innere des Gehäuses hineinragt, wobei der mechanische Energiespeicher an dem Tragelement befestigt ist. Bevorzugt umfasst das Tragelement einen Flansch.

Gemäss einem Aspekt der Anmeldung umfasst das Gehäuse eine oder mehrere insbesondere an das Tragelement anschliessende zweite Verstärkungsrippen. Bevorzugt ist die zweite Verstärkungsrippe mit dem Tragelement fest, insbesondere monolithisch verbunden.

Gemäss einem Aspekt der Anmeldung umfasst das Gehäuse eine erste Gehäuseschale, eine zweite Gehäuseschale und eine Gehäusedichtung. Bevorzugt dichtet die Gehäusedichtung die erste Gehäuseschale gegenüber der zweiten Gehäuseschale ab.

Gemäss einem Aspekt der Anmeldung weist die erste Gehäuseschale eine erste Materialstärke und die zweite Gehäuseschale eine zweite Materialstärke auf, wobei die Gehäusedichtung eine Dichtungsmaterialstärke aufweist, welche sich von der ersten und/oder der zweiten Materialstärke unterscheidet.

Vorrichtung, wobei die erste Gehäuseschale ein erstes Gehäusematerial umfasst und die zweite Gehäuseschale ein zweites Gehäusematerial umfasst, und wobei die Gehäusedichtung ein Dichtungsmaterial umfasst, welches sich von dem ersten und/oder dem zweiten Gehäusematerial unterscheidet.

Gemäss einem Aspekt der Anmeldung umfasst die Gehäusedichtung ein Elastomer.

Gemäss einem Aspekt der Anmeldung weist die erste und/oder die zweite Gehäuseschale eine Nut auf, in welcher die Gehäusedichtung angeordnet ist.

Gemäss einem Aspekt der Anmeldung ist die Gehäusedichtung mit der ersten und/oder der zweiten Gehäuseschale stoffschlüssig verbunden.

Gemäss einem Aspekt der Anmeldung dichtet die Kolbendichtung den Führungskanal gegenüber dem Energieübertragungselement ab.

Gemäss einem Aspekt der Anmeldung umfasst die Vorrichtung eine Anpresseinrichtung, insbesondere mit einem Anpressfühler, zum Erkennen des Abstandes der Vorrichtung zu dem Untergrund und eine Anpressfühlerdichtung. Bevorzugt dichtet die Anpressfühlerdichtung die Anpresseinrichtung, insbesondere den Anpressfühler, gegenüber der ersten und/oder zweiten Gehäuseschale ab.

Gemäss einem Aspekt der Anmeldung weist die Kolbendichtung und/oder die Anpressfühlerdichtung eine Kreisringform auf.

Gemäss einem Aspekt der Anmeldung umfasst die Kolbendichtung und/oder die Anpressfühlerdichtung einen Faltenbalg.

Gemäss einem Aspekt der Anmeldung umfasst die Vorrichtung ein Kontaktelement zum elektrischen Anschliessen eines elektrischen Energiespeichers an die Vorrichtung, eine erste elektrische Leitung zur Verbindung des elektrischen Motors mit der Motorsteuereinrichtung, und eine zweite elektrische Leitung zur Verbindung des Kontaktelementes mit der Motorsteuereinrichtung, wobei die erste elektrische Leitung länger ist als die zweite elektrische Leitung.

Bevorzugt versorgt die Motorsteuereinrichtung den Motor über die erste elektrische Leitung in kommutierten Phasen mit elektrischem Strom.

Gemäss einem Aspekt der Anmeldung umfasst einen Griff für ein Greifen der Vorrichtung durch einen Benutzer. Bevorzugt sind das Gehäuse und das Steuerungsgehäuse auf gegenüberliegenden Seiten des Griffes angeordnet.

Gemäss einem Aspekt der Anmeldung schliesst das Gehäuse und/oder das Steuerungsgehäuse an den Griff an.

Gemäss einem Aspekt der Anmeldung umfasst die Vorrichtung einen Grifffühler zum Erkennen eines Greifens und Loslassens des Griffes durch einen Benutzer.

Bevorzugt ist die Steuereinrichtung dazu vorgesehen, den mechanischen Energiespeicher zu entleeren, sobald mittels des Grifffühlers ein Loslassen des Griffes durch einen Benutzer erkannt wird.

Gemäss einem Aspekt der Anmeldung umfasst der Grifffühler ein Schaltelement, welches die Steuereinrichtung in einen Bereitschaftsbetrieb und/oder in einen ausgeschalteten Zustand versetzt, solange der Griff losgelassen ist, und der die Steuereinrichtung in einen Normalbetrieb versetzt, solange der Griff von einem Benutzer gegriffen wird.

Bevorzugt ist das Schaltelement ein mechanischer Schalter, insbesondere ein galvanischer Schliessschalter, ein magnetischer Schalter, ein elektronischer Schalter, ein insbesondere elektronischer Sensor oder ein berührungsloser Näherungsschalter ist.

Gemäss einem Aspekt der Anmeldung weist der Griff eine Grifffläche auf, welche bei einem Greifen des Griffes durch den Benutzer von einer Hand des Benutzers erfasst wird, und wobei der Grifffühler, insbesondere das Schaltelement, an der Grifffläche angeordnet ist.

Gemäss einem Aspekt der Anmeldung weist der Griff einen Auslöseschalter zum Auslösen des Eintreibens des Befestigungselementes in den Untergrund und den Grifffühler, insbesondere das Schaltelement, auf, wobei der Auslöseschalter für eine Betätigung mit dem Zeigefinger und der Grifffühler, insbesondere das Schaltelement, für eine Betätigung mit dem Mittelfinger, dem Ringfinger und/oder dem kleinen Finger derselben Hand wie der des Zeigefingers vorgesehen ist.

Gemäss einem Aspekt der Anmeldung weist der Griff einen Auslöseschalter zum Auslösen des Eintreibens des Befestigungselementes in den Untergrund und den Schalter auf, wobei der Auslöseschalter für eine Betätigung mit dem Zeigefinger und der Grifffühler, insbesondere das Schaltelement, für eine Betätigung mit der Handfläche und/oder dem Handballen derselben Hand wie der des Zeigefingers vorgesehen ist.

Gemäss einem Aspekt der Anmeldung umfasst die Antriebseinrichtung eine Drehmomentübertragungseinrichtung zur Übertragung eines Drehmomentes von dem Motorabtrieb auf den Drehantrieb. Bevorzugt umfasst die Drehmomentübertragungseinrichtung ein motorseitiges Drehelement mit einer ersten Drehachse und ein bewegungsumwandlerseitiges Drehelement mit einer gegenüber der ersten Drehachse parallel versetzten zweiten Drehachse, wobei eine Drehung des motorseitigen Drehelementes um die erste Achse unmittelbar eine Drehung des bewegungsumwandlerseitigen Drehelementes bewirkt. Bevorzugt ist das motorseitige Drehelement relativ zum Motorabtrieb unverschiebbar und relativ zum bewegungsumwandlerseitigen Drehelement entlang der ersten Drehachse verschiebbar angeordnet. Durch die Entkopplung des motorseitigen Drehelementes von dem bewegungsumwandlerseitigen Drehelement wird das motorseitige Drehelement zusammen mit dem Motor von dem bewegungsumwandlerseitigen Drehelement zusammen mit dem Bewegungsumwandler schlagentkoppelt.

Gemäss einem Aspekt der Anmeldung ist das motorseitige Drehelement relativ zum Motorabtrieb drehfest angeordnet und insbesondere als Motorritzel ausgebildet.

Gemäss einem Aspekt der Anmeldung umfasst die Drehmomentübertragungseinrichtung ein oder mehrere weitere Drehelemente, welche ein Drehmoment von dem Motorabtrieb auf das motorseitige Drehelement übertragen, und wobei eine oder mehrere Drehachsen des oder der weiteren Drehelemente gegenüber einer Drehachse des Motorabtriebs und/oder gegenüber der ersten Drehachse versetzt angeordnet sind. Das oder die weiteren Drehelemente sind dann zusammen mit dem Motor von dem Bewegungsumwandler schlagentkoppelt.

Gemäss einem Aspekt der Anmeldung ist das bewegungsumwandlerseitige Drehelement relativ zum Drehantrieb drehfest angeordnet.

Gemäss einem Aspekt der Anmeldung umfasst die Drehmomentübertragungseinrichtung ein oder mehrere weitere Drehelemente, welche ein Drehmoment von dem bewegungsumwandlerseitigen Drehelement auf den Drehantrieb übertragen, und wobei eine oder mehrere Drehachsen des oder der weiteren Drehelemente gegenüber der zweiten Drehachse und/oder gegenüber einer Drehachse des Drehantriebs versetzt angeordnet sind.

Gemäss einem Aspekt der Anmeldung weist das motorseitige Drehelement eine motorseitige Zahnung und das bewegungsumwandlerseitige Drehelement eine antriebselementseitige Zahnung auf. Bevorzugt verläuft die motorseitige Zahnung und/oder die antriebselementseitige Zahnung in Richtung der ersten Drehachse.

Gemäss einem Aspekt der Anmeldung umfasst die Antriebseinrichtung ein Motordämpfungselement, welches geeignet ist, Bewegungsenergie, insbesondere Vibrationsenergie, des Motors gegenüber dem Bewegungsumwandler zu absorbieren.

Bevorzugt umfasst das Motordämpfungselement ein Elastomer.

Gemäss einem Aspekt der Anmeldung ist das Motordämpfungselement am Motor, insbesondere ringförmig um den Motor angeordnet.

Gemäss einem Aspekt der Anmeldung umfasst die Antriebseinrichtung eine Halteeinrichtung, welche dafür geeignet ist, den Motorabtrieb gegenüber Drehung festzuhalten.

Gemäss einem Aspekt der Anmeldung ist das Motordämpfungselement an der Halteeinrichtung, insbesondere ringförmig um die Halteeinrichtung angeordnet.

Bevorzugt ist das Motordämpfungselement insbesondere stoffschlüssig an dem Motor und/oder der Halteeinrichtung befestigt. Besonders bevorzugt ist das Motordämpfungselement an den Motor und/oder die Halteeinrichtung anvulkanisiert.

Bevorzugt ist das Motordämpfungselement an dem Gehäuse angeordnet. Besonders bevorzugt weist das Gehäuse ein insbesondere ringförmiges Montageelement auf, an dem das Motordämpfungselement angeordnet, insbesondere befestigt ist. Besonders bevorzugt ist das Motordämpfungselement an das Montageelement anvulkanisiert.

Gemäss einem Aspekt der Anmeldung dichtet das Motordämpfungselement den Motor und/oder die Halteeinrichtung gegenüber dem Gehäuse ab.

Gemäss einem Aspekt der Anmeldung umfasst der Motor ein motorseitiges Zugentlastungselement, mit welchem die erste elektrische Leitung beabstandet von der elektrischen Verbindung an dem Motor befestigt ist.

Gemäss einem Aspekt der Anmeldung umfasst das Gehäuse ein gehäuseseitiges Zugentlastungselement, mit welchem die erste elektrische Leitung an dem Gehäuse befestigt ist.

Gemäss einem Aspekt der Anmeldung umfasst das Gehäuse eine Motorführung für eine Führung des Motors in Richtung der ersten Drehachse.

Gemäss einem Aspekt der Anmeldung ist die Halteeinrichtung dafür vorgesehen, auf das Drehelement zu bewegt zu werden, insbesondere in Richtung der Drehachse, um das Drehelement gegenüber Drehung festzuhalten.

Gemäss einem Aspekt der Anmeldung ist die Halteeinrichtung elektrisch betätigbar. Bevorzugt übt die Halteeinrichtung bei anliegender elektrischer Spannung eine Haltekraft auf das Drehelement aus und gibt bei wegfallender elektrischer Spannung das Drehelement frei.

Gemäss einem Aspekt der Anmeldung umfasst die Halteeinrichtung eine Magnetspule.

Gemäss einem Aspekt der Anmeldung hält die Halteeinrichtung das Drehelement mittels eines Reibschlusses fest.

Gemäss einem Aspekt der Anmeldung umfasst die Halteeinrichtung eine Schlingfederkupplung.

Gemäss einem Aspekt der Anmeldung hält die Halteeinrichtung das Drehelement mittels eines Formschlusses fest.

Gemäss einem Aspekt der Anmeldung umfasst die Energieübertragungseinrichtung einen Motor mit einem Motorabtrieb, welcher ununterbrechbar kraftgekoppelt mit dem mechanischen Energiespeicher verbunden ist. Eine Bewegung des Motorabtriebs bedingt ein Laden oder Entladen des Energiespeichers und umgekehrt. Der Kraftfluss zwischen dem Motorabtrieb und dem mechanischen Energiespeicher kann nicht, wie beispielsweise mittels einer Kupplung, unterbrochen werden.

Gemäss einem Aspekt der Anmeldung umfasst die Energieübertragungseinrichtung einen Motor mit einem Motorabtrieb, welcher ununterbrechbar drehmomentgekoppelt mit dem Drehantrieb verbunden ist. Eine Drehung des Motorabtriebs bedingt eine Drehung des Drehantriebs und umgekehrt. Der Drehmomentfluss zwischen dem Motorabtrieb und dem Drehantrieb kann nicht, wie beispielsweise mittels einer Kupplung, unterbrochen werden.

Gemäss einem Aspekt der Anmeldung umfasst die Vorrichtung einen Führungskanal für eine Führung des Befestigungselementes, eine relativ zu dem Führungskanal in Richtung der Setzachse verschiebbar angeordnete Anpresseinrichtung, insbesondere mit einem Anpressfühler, zum Erkennen des Abstandes der Vorrichtung zu dem Untergrund in Richtung der Setzachse, ein Sperrelement, welches in einer Freigabestellung des Sperrelementes ein Verschieben der Anpresseinrichtung zulässt und in einer Sperrstellung des Sperrelementes ein Verschieben der Anpresseinrichtung verhindert, und ein von aussen betätigbares Entsperrelement, welches in einer Entsperrstellung des Entsperrelementes das Sperrelement in der Freigabestellung des Sperrelementes hält und in einer Wartestellung des Entsperrelementes eine Bewegung des Sperrelementes in die Sperrstellung zulässt.

Gemäss einem Aspekt der Anmeldung lässt die Anpresseinrichtung eine Übertragung von Energie auf das Befestigungselement nur zu, wenn die Anpresseinrichtung einen Abstand der Vorrichtung zu dem Untergrund in Richtung der Setzachse erkennt, welcher einen vorgegebenen Höchstwert nicht überschreitet.

Gemäss einem Aspekt der Anmeldung umfasst die Vorrichtung eine Einrückfeder, welche das Sperrelement in die Sperrstellung bewegt.

Gemäss einem Aspekt der Anmeldung umfasst der Führungskanal einen Abschussabschnitt, wobei ein in dem Abschussabschnitt angeordnetes Befestigungselement das Sperrelement in der Freigabestellung hält, insbesondere gegen eine Kraft der Einrückfeder. Bevorzugt ist der Abschussabschnitt dafür vorgesehen, dass sich das Befestigungselement, welches zum Eintreiben in den Untergrund bestimmt ist, in dem Abschussabschnitt befindet.

Bevorzugt weist der Führungskanal, insbesondere in dem Abschussabschnitt, eine Zuführausnehmung, insbesondere Zuführöffnung auf, durch welche ein Befestigungselement dem Führungskanal zuführbar ist.

Gemäss einem Aspekt der Anmeldung umfasst die Vorrichtung eine Zuführeinrichtung zur Zuführung von Befestigungselementen zu dem Führungskanal. Bevorzugt ist die Zuführeinrichtung als Magazin ausgebildet.

Gemäss einem Aspekt der Anmeldung umfasst die Zuführeinrichtung eine Vorschubfeder, welche ein in dem Abschussabschnitt angeordnetes Befestigungselement in dem Führungskanal hält. Bevorzugt ist die auf das in dem Abschussabschnitt angeordnete Befestigungselement wirkende Federkraft der Vorschubfeder grösser als die auf dasselbe Befestigungselement wirkende Federkraft der Einrückfeder.

Gemäss einem Aspekt der Anmeldung umfasst die Zuführeinrichtung ein von der Vorschubfeder gegen den Führungskanal beaufschlagtes Vorschubelement. Bevorzugt ist das Vorschubelement von aussen durch einen Benutzer betätigbar, insbesondere verschiebbar, um Befestigungselemente in die Zuführeinrichtung zu bringen.

Gemäss einem Aspekt der Anmeldung umfasst die Vorrichtung eine Ausrückfeder, welche das Entsperrelement in die Wartestellung bewegt.

Bevorzugt ist das Sperrelement in einer ersten Richtung zwischen der Freigabestellung und der Sperrstellung hin und her bewegbar ist, und wobei das Entsperrelement in einer zweiten Richtung zwischen der Entsperrstellung und der Wartestellung hin und her bewegbar ist.

Gemäss einem Aspekt der Anmeldung ist das Vorschubelement in der ersten Richtung hin und her bewegbar.

Bevorzugt ist die erste Richtung gegenüber der zweiten Richtung geneigt, insbesondere rechtwinklig geneigt.

Gemäss einem Aspekt der Anmeldung umfasst das Sperrelement eine gegenüber der ersten Richtung spitzwinklig geneigte erste Verdrängungsfläche, welche dem Entsperrelement gegenübersteht.

Gemäss einem Aspekt der Anmeldung umfasst das Entsperrelement eine gegenüber der zweiten Richtung spitzwinklig geneigte zweite Verdrängungsfläche, welche dem Sperrelement gegenübersteht.

Gemäss einem Aspekt der Anmeldung umfasst das Vorschubelement eine gegenüber der ersten Richtung spitzwinklig geneigte dritte Verdrängungsfläche, welche dem Entsperrelement gegenübersteht.

Gemäss einem Aspekt der Anmeldung umfasst das Entsperrelement eine gegenüber der zweiten Richtung spitzwinklig geneigte vierte Verdrängungsfläche, welche dem Vorschubelement gegenübersteht.

Gemäss einem Aspekt der Anmeldung umfasst das Entsperrelement ein erstes Rastelement und das Vorschubelement ein zweites Rastelement, wobei das erste und das zweite Rastelement miteinander verrasten, wenn das Entsperrelement in die Entsperrstellung bewegt wird.

Gemäss einem Aspekt der Anmeldung ist das Vorschubelement von aussen durch einen Benutzer von dem Führungskanal weg bewegbar, insbesondere gegen die Vorschubfeder spannbar, um Befestigungselemente in die Zuführeinrichtung zu füllen.

Gemäss einem Aspekt der Anmeldung löst sich die Verrastung zwischen dem Entsperrelement und dem Vorschubelement, wenn das Vorschubelement von dem Führungskanal weg bewegt wird.

Gemäss einem Aspekt der Anmeldung wird bei einem Verfahren zur Verwendung der Vorrichtung der Motor mit abnehmender Drehzahl gegen ein Lastdrehmoment betrieben, welches von dem mechanischen Energiespeicher auf den Motor ausgeübt wird. Insbesondere ist das Lastdrehmoment umso grösser, je mehr Energie in dem mechanischen Energiespeicher gespeichert ist.

Gemäss einem Aspekt der Anmeldung wird der Motor zunächst während eines ersten Zeitraums mit zunehmender Drehzahl gegen das Lastdrehmoment und anschliessend während eines zweiten Zeitraums mit stetig abnehmender Drehzahl gegen das Lastdrehmoment betrieben, wobei der zweite Zeitraum länger ist als der erste Zeitraum.

Gemäss einem Aspekt der Anmeldung ist das grösstmögliche Lastdrehmoment grösser als das grösstmögliche Motordrehmoment, das von dem Motor ausübbar ist.

Gemäss einem Aspekt der Anmeldung wird der Motor mit abnehmender Energie versorgt, während Energie in dem mechanischen Energiespeicher gespeichert wird.

Gemäss einem Aspekt der Anmeldung wird die Drehzahl des Motors abgesenkt, während Energie in dem mechanischen Energiespeicher gespeichert wird.

Gemäss einem Aspekt der Anmeldung ist der Motor dazu vorgesehen, mit abnehmender Drehzahl gegen ein Lastdrehmoment betrieben zu werden, welches von dem mechanischen Energiespeicher auf den Motor ausgeübt wird.

Gemäss einem Aspekt der Anmeldung ist die Motorsteuereinrichtung dazu geeignet, den Motor mit abnehmender Energie zu versorgen oder die Drehzahl des Motors abzusenken, während der Motor zur Speicherung von Energie in dem mechanischen Energiespeicher arbeitet.

Gemäss einem Aspekt der Anmeldung umfasst die Vorrichtung einen Zwischenenergiespeicher, welcher dazu vorgesehen ist, von dem Motor abgegebene Energie vorübergehend zu speichern und an den mechanischen Energiespeicher abzugeben, während der Motor zur Speicherung von Energie in dem mechanischen Energiespeicher arbeitet.

Bevorzugt ist der Zwischenenergiespeicher dazu vorgesehen, Rotationsenergie zu speichern. Insbesondere umfasst der Zwischenenergiespeicher ein Schwungrad.

Gemäss einem Aspekt der Anmeldung ist der Zwischenenergiespeicher, insbesondere das Schwungrad drehfest mit dem Motorabtrieb verbunden.

Gemäss einem Aspekt der Anmeldung ist der Zwischenenergiespeicher, insbesondere das Schwungrad in einem Motorgehäuse des Motors aufgenommen.

Gemäss einem Aspekt der Anmeldung ist der Zwischenenergiespeicher, insbesondere das Schwungrad, ausserhalb eines Motorgehäuses des Motors angeordnet.

Gemäss einem Aspekt der Anmeldung umfasst das Verzögerungselement ein aus einem Metall und/oder einer Legierung bestehendes Anschlagelement mit einer Anschlagfläche für das Energieübertragungselement und ein aus einem Elastomer bestehendes Schlagdämpfungselement.

Gemäss einem Aspekt der Anmeldung beträgt die Masse des Schlagdämpfungselementes mindestens 15 %, bevorzugt mindestens 20 %, besonders bevorzugt mindestens 25 % der Masse des Anschlagelementes. Hierdurch ist eine Erhöhung der Lebensdauer des Schlagdämpfungselementes bei gleichzeitiger Gewichtseinsparung möglich.

Gemäss einem Aspekt der Anmeldung beträgt die Masse des Schlagdämpfungselementes mindestens 15 %, bevorzugt mindestens 20 %, besonders bevorzugt mindestens 25 % der Masse des Energieübertragungselementes. Hierdurch ist ebenfalls eine Erhöhung der Lebensdauer des Schlagdämpfungselementes bei gleichzeitiger Gewichtseinsparung möglich.

Gemäss einem Aspekt der Anmeldung beträgt ein Verhältnis der Masse des Schlagdämpfungselementes zur maximalen kinetischen Energie des Energieübertragungselementes mindestens 0,15 g/J, bevorzugt mindestens 0,20 g/J, besonders bevorzugt mindestens 0,25 g/J. Hierdurch ist ebenfalls eine Erhöhung der Lebensdauer des Schlagdämpfungselementes bei gleichzeitiger Gewichtseinsparung möglich.

Gemäss einem Aspekt der Anmeldung ist das Schlagdämpfungselement stoffschlüssig mit dem Anschlagelement verbunden, insbesondere auf das Anschlagelement aufvulkanisiert.

Gemäss einem Aspekt der Anmeldung umfasst das Elastomer HNBR, NBR, NR, SBR, IIR und/oder CR.

Gemäss einem Aspekt der Anmeldung weist das Elastomer eine Shore-Härte auf, welche mindestens 50 Shore A beträgt.

Gemäss einem Aspekt der Anmeldung umfasst die Legierung einen insbesondere gehärteten Stahl.

Gemäss einem Aspekt der Anmeldung weist das Metall, insbesondere die Legierung eine Oberflächenhärte auf, welche mindestens 30 HRC beträgt.

Gemäss einem Aspekt der Anmeldung umfasst die Anschlagfläche einen konkavkonischen Abschnitt. Bevorzugt stimmt der Konus des konkavkonischen Abschnitts mit dem Konus des konvexkonischen Abschnitts des Energieübertragungselementes überein.

Gemäss einem Aspekt der Anmeldung wird bei einem Verfahren der Motor zunächst in einer Rückstellrichtung drehzahlgeregelt und im Wesentlichen lastfrei betrieben und anschliessend in einer Spannrichtung stromstärkegeregelt betrieben, um Energie auf den mechanischen Energiespeicher zu übertragen.

Bevorzugt ist die Energiequelle durch einen elektrischen Energiespeicher gebildet.

Gemäss einem Aspekt der Anmeldung wird vor dem Betreiben des Motors in Spannrichtung eine Sollstromstärke nach vorgegebenen Kriterien bestimmt.

Bevorzugt umfassen die vorgegebenen Kriterien einen Ladezustand und/oder eine Temperatur des elektrischen Energiespeichers und/oder eine Betriebsdauer und/oder ein Alter der Vorrichtung.

Gemäss einem Aspekt der Anmeldung ist der Motor dazu vorgesehen, in einer Spannrichtung gegen das Lastdrehmoment und in einer zur Spannrichtung entgegen gesetzten Rückstellrichtung im Wesentlichen lastfrei betrieben zu werden. Bevorzugt ist die Motorsteuereinrichtung dazu vorgesehen, bei Drehung des Motors in Spannrichtung die von dem Motor aufgenommene Stromstärke auf eine vorgegebene Sollstromstärke zu regeln und bei Drehung des Motors in der Rückstellrichtung die Drehzahl des Motors auf eine vorgegebene Solldrehzahl zu regeln.

Gemäss einem Aspekt der Anmeldung umfasst die Vorrichtung die Energiequelle.

Gemäss einem Aspekt der Anmeldung ist die Energiequelle durch einen elektrischen Energiespeicher gebildet.

Gemäss einem Aspekt der Anmeldung ist die Motorsteuereinrichtung dazu geeignet, die vorgegebene Sollstromstärke nach vorgegebenen Kriterien zu bestimmen.

Gemäss einem Aspekt der Anmeldung umfasst die Vorrichtung einen Sicherheitsmechanismus, durch den die elektrische Energiequelle so mit Vorrichtung koppelbar beziehungsweise gekoppelt ist, dass der mechanische Energiespeicher automatisch entspannt wird, wenn die elektrische Energiequelle von der Vorrichtung getrennt wird. Bevorzugt wird die in dem mechanischen Energiespeicher gespeicherte Energie kontrolliert abgebaut.

Gemäss einem Aspekt der Anmeldung umfasst die Vorrichtung eine Halteeinrichtung, welche gespeicherte Energie in dem mechanischen Energiespeicher hält und welche ein Entladen des mechanischen Energiespeichers automatisch freigibt, wenn die elektrische Energiequelle von der Vorrichtung getrennt wird.

Gemäss einem Aspekt der Anmeldung umfasst der Sicherheitsmechanismus einen elektromechanischen Aktuator, der eine Sperreinrichtung, welche gespeicherte Energie in dem mechanischen Energiespeicher hält, automatisch entriegelt, wenn die elektrische Energiequelle von der Vorrichtung getrennt wird.

Gemäss einem Aspekt der Anmeldung umfasst die Vorrichtung eine Kupplungs- und/oder Bremseinrichtung, um die in dem mechanischen Energiespeicher gespeicherte Energie kontrolliert abzubauen, wenn der mechanische Energiespeicher entladen wird.

Gemäss einem Aspekt der Anmeldung umfasst der Sicherheitsmechanismus mindestens einen Sicherheitsschalter umfasst, der Phasen des elektrischen Antriebsmotors kurzschließt, um in dem mechanischen Energiespeicher gespeicherte Energie kontrolliert abzubauen, wenn der mechanische Energiespeicher entladen wird. Bevorzugt ist der Sicherheitsschalter als selbst leitender elektronischer Schalter, insbesondere als J-Fet, ausgeführt.

Gemäss einem Aspekt der Anmeldung umfasst der Motor drei Phasen und ist durch eine 3-Phasen-Motor-Brückenschaltung mit Freilaufdioden angesteuert, die eine beim Entladen des mechanischen Energiespeichers erzeugte Spannung gleichrichten.

### Ausführungsbeispiele

Nachfolgend werden Ausführungsformen einer Vorrichtung zum Eintreiben eines Befestigungselementes in einen Untergrund anhand von Beispielen unter Bezugnahme auf die Zeichnungen näher erläutert. Es zeigen:
- Fig. 1: eine Seitenansicht einer Eintreibvorrichtung,
- Fig. 2: eine Explosionsansicht eines Gehäuses,
- Fig. 3: eine Explosionsansicht eines Gerüsthakens,
- Fig. 4: eine Seitenansicht einer Eintreibvorrichtung mit geöffnetem Gehäuse,
- Fig. 5: eine Schrägansicht eines elektrischen Energiespeichers,
- Fig. 6: eine Schrägansicht eines elektrischen Energiespeichers,
- Fig. 7: eine Teilansicht einer Eintreibvorrichtung,
- Fig. 8: eine Teilansicht einer Eintreibvorrichtung,
- Fig. 9: eine Schrägansicht einer Steuereinrichtung mit Verkabelung,
- Fig. 10: einen Längsschnitt eines Elektromotors,
- Fig. 11: eine Teilansicht einer Eintreibvorrichtung,
- Fig. 12a: eine Schrägansicht eines Spindeltriebs,
- Fig. 12b: einen Längsschnitt eines Spindeltriebs,
- Fig. 13: eine Schrägansicht einer Spannvorrichtung,
- Fig. 14: eine Schrägansicht einer Spannvorrichtung,
- Fig. 15: eine Schrägansicht eines Rollenhalters,
- Fig. 16: einen Längsschnitt einer Kupplung,
- Fig. 17: einen Längsschnitt eines eingekuppelten Kolbens,
- Fig. 18: eine Schrägansicht eines Kolbens,
- Fig. 19: eine Schrägansicht eines Kolbens mit einem Verzögerungselement,
- Fig. 20: eine Seitenansicht eines Kolbens mit einem Verzögerungselement,
- Fig. 21: einen Längsschnitt eines Kolbens mit einem Verzögerungselement,
- Fig. 22: eine Seitenansicht eines Verzögerungselementes,
- Fig. 23: einen Längsschnitt eines Verzögerungselementes,
- Fig. 24: eine Teilansicht einer Eintreibvorrichtung,
- Fig. 25: eine Seitenansicht einer Anpresseinrichtung,
- Fig. 26: eine Teilansicht einer Anpresseinrichtung ,
- Fig. 27: eine Teilansicht einer Anpresseinrichtung ,
- Fig. 28: eine Teilansicht einer Anpresseinrichtung ,
- Fig. 29: eine Teilansicht einer Eintreibvorrichtung,
- Fig. 30: eine Schrägansicht einer Bolzenführung,
- Fig. 31: eine Schrägansicht einer Bolzenführung,
- Fig. 32: eine Schrägansicht einer Bolzenführung,
- Fig. 33: einen Querschnitt einer Bolzenführung,
- Fig. 34: einen Querschnitt einer Bolzenführung,
- Fig. 35: eine Teilansicht einer Eintreibvorrichtung,
- Fig. 36: eine Teilansicht einer Eintreibvorrichtung,
- Fig. 37: ein Aufbauschema einer Eintreibvorrichtung,
- Fig. 38: ein Schaltdiagramm einer Eintreibvorrichtung,
- Fig. 39: ein Zustandsdiagramm einer Eintreibvorrichtung,
- Fig. 40: ein Zustandsdiagramm einer Eintreibvorrichtung,
- Fig. 41: ein Zustandsdiagramm einer Eintreibvorrichtung,
- Fig. 42: ein Zustandsdiagramm einer Eintreibvorrichtung,
- Fig. 43: einen Längsschnitt einer Eintreibvorrichtung,
- Fig. 44: einen Längsschnitt einer Eintreibvorrichtung und
- Fig. 45: einen Längsschnitt einer Eintreibvorrichtung.

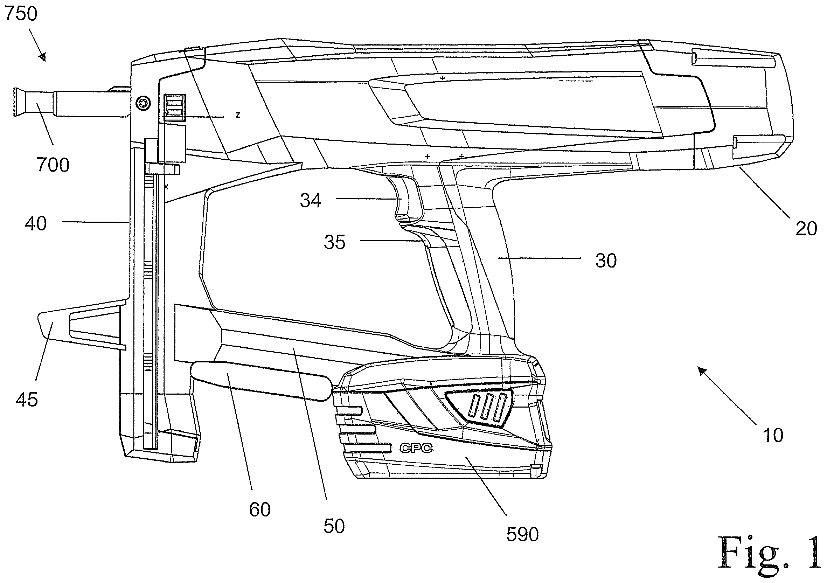

Fig. 1 zeigt eine Eintreibvorrichtung 10 zum Eintreiben eines Befestigungselementes, beispielsweise eines Nagels oder Bolzens, in einen Untergrund in einer Seitenansicht. Die Eintreibvorrichtung 10 weist ein nicht dargestelltes Energieübertragungselement zur Übertragung von Energie auf das Befestigungselement sowie ein Gehäuse 20 auf, in welchem das Energieübertragungselement und eine ebenfalls nicht dargestellte Antriebseinrichtung zur Beförderung des Energieübertragungselementes aufgenommen sind.

Die Eintreibvorrichtung 10 weist ferner einen Griff 30, ein Magazin 40 und eine den Griff 30 mit dem Magazin 40 verbindende Brücke 50 auf. Das Magazin ist nicht abnehmbar. An der Brücke 50 sind ein Gerüsthaken 60 zur Aufhängung der Eintreibvorrichtung 10 an einem Gerüst oder dergleichen und ein als Akku 590 ausgebildeter elektrischer Energiespeicher befestigt. An dem Griff 30 sind ein Abzug 34 sowie ein als Handschalter 35 ausgebildeter Grifffühler angeordnet. Weiterhin weist die Eintreibvorrichtung 10 einen Führungskanal 700 für eine Führung des Befestigungselementes und eine Anpresseinrichtung 750 zur Erkennung eines Abstandes der Eintreibvorrichtung 10 von einem nicht dargestellten Untergrund auf. Ein Ausrichten der Eintreibvorrichtung senkrecht zu einem Untergrund wird durch eine Ausrichthilfe 45 unterstützt.

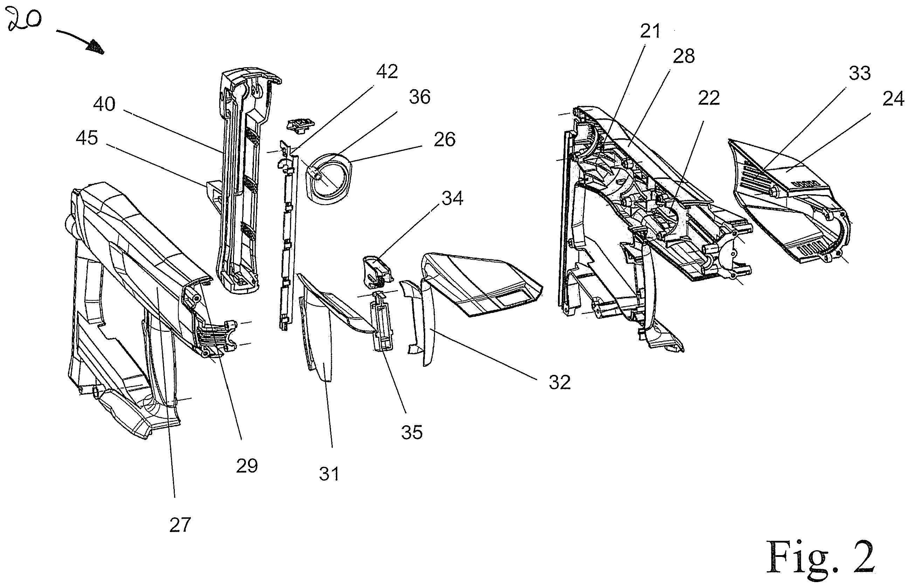

Fig. 2 zeigt das Gehäuse 20 der Eintreibvorrichtung 10 in einer Explosionsansicht. Das Gehäuse 20 weist eine erste Gehäuseschale 27, eine zweite Gehäuseschale 28 sowie eine Gehäusedichtung 29 auf, welche die erste Gehäuseschale 27 gegen die zweite Gehäuseschale 28 abdichtet, so dass das Innere des Gehäuses 20 gegen Staub und dergleichen geschützt ist. Bei einem nicht gezeigten Ausführungsbeispiel ist die Gehäusedichtung 29 aus einem Elastomer hergestellt und an die erste Gehäuseschale 27 angespritzt.

Das Gehäuse weist zur Verstärkung gegen Schlagkräfte während des Eintreibens eines Befestigungselementes in einen Untergrund Verstärkungsrippen 21 und zweite Verstärkungsrippen 22 auf. Ein Haltering 26 dient der Halterung eines nicht dargestellten Verzögerungselementes, welches in dem Gehäuse 20 aufgenommen ist. Der Haltering 26 ist vorzugsweise aus Kunststoff gefertigt, insbesondere gespritzt, und Teil des Gehäuses. Der Haltering 26 weist eine Anpressführung 36 zur Führung einer nicht dargestellten Verbindungsstange einer Anpresseinrichtung auf.

Weiterhin weist das Gehäuse 20 ein Motorgehäuse 24 mit Lüftungsschlitzen zur Aufnahme eines nicht dargestellten Motors und ein Magazin 40 mit einer Magazinschiene 42 auf. Darüber hinaus weist das Gehäuse 20 einen Griff 30 auf, welcher eine erste Grifffläche 31 und eine zweite Grifffläche 32 umfasst. Die beiden Griffflächen 31, 32 sind vorzugsweise auf den Griff 30 aufgespritzte Folien aus Kunststoff. Ein Abzug 34 sowie ein als Handschalter 35 ausgebildeter Grifffühler sind am Griff 30 angeordnet.

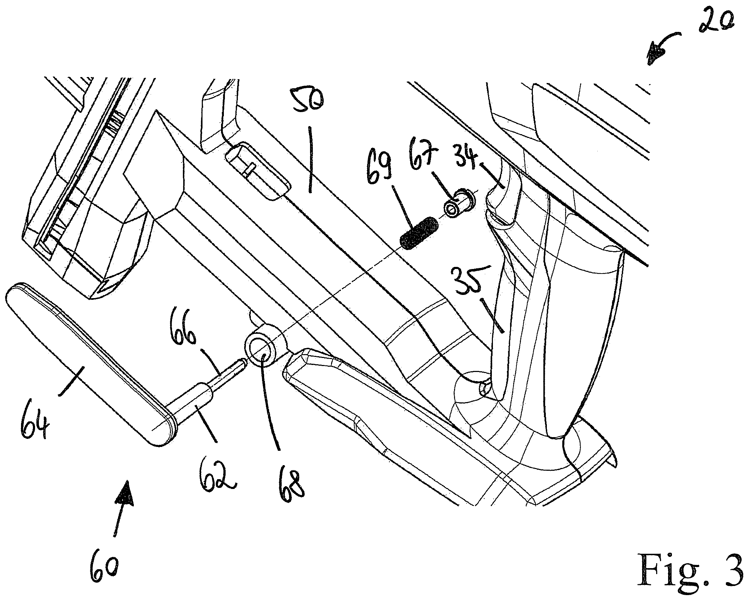

Fig. 3 zeigt einen Gerüsthaken 60 mit einem Abstandshalter 62 und einem Rückhalteelement 64, welcher einen Zapfen 66 aufweist, welcher in einer Brückendurchführung 68 der Brücke 50 des Gehäuses befestigt ist. Zur Befestigung dient dabei eine Schraubhülse 67, welche von einer Haltefeder 69 gegen Lockerung gesichert ist. Der Gerüsthaken 60 ist dafür vorgesehen, mit dem Rückhalteelement 64 in eine Gerüststrebe oder dergleichen eingehängt zu werden, um die Eintreibvorrichtung 10 beispielsweise in Arbeitspausen an einem Gerüst oder dergleichen aufzuhängen.

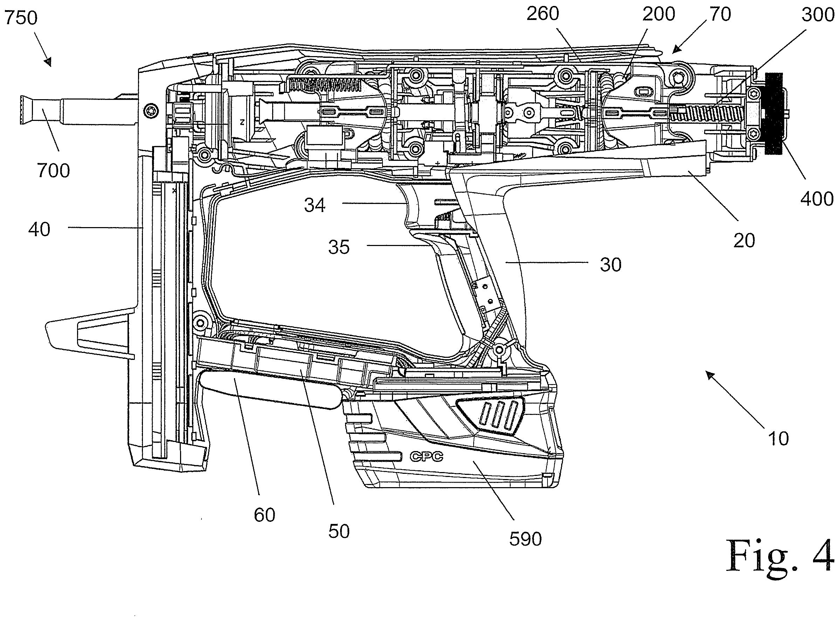

Fig. 4 zeigt die Eintreibvorrichtung 10 mit geöffnetem Gehäuse 20. In dem Gehäuse 20 ist eine Antriebseinrichtung 70 zur Beförderung eines in der Zeichnung verdeckten Energieübertragungselementes aufgenommen. Die Antriebseinrichtung 70 umfasst einen nicht dargestellten Elektromotor zur Umwandlung von elektrischer Energie aus dem Akku 590 in Drehenergie, eine ein Getriebe 400 umfassende Drehmomentübertragungseinrichtung zur Übertragung eines Drehmomentes des Elektromotors auf einen als Spindeltrieb 300 ausgebildeten Bewegungsumwandler, eine einen Rollenzug 260 umfassende Kraftübertragungseinrichtung zur Übertragung einer Kraft von dem Bewegungsumwandler auf einen als Feder 200 ausgebildeten mechanischen Energiespeicher und zur Übertragung einer Kraft von der Feder auf das Energieübertragungselement.

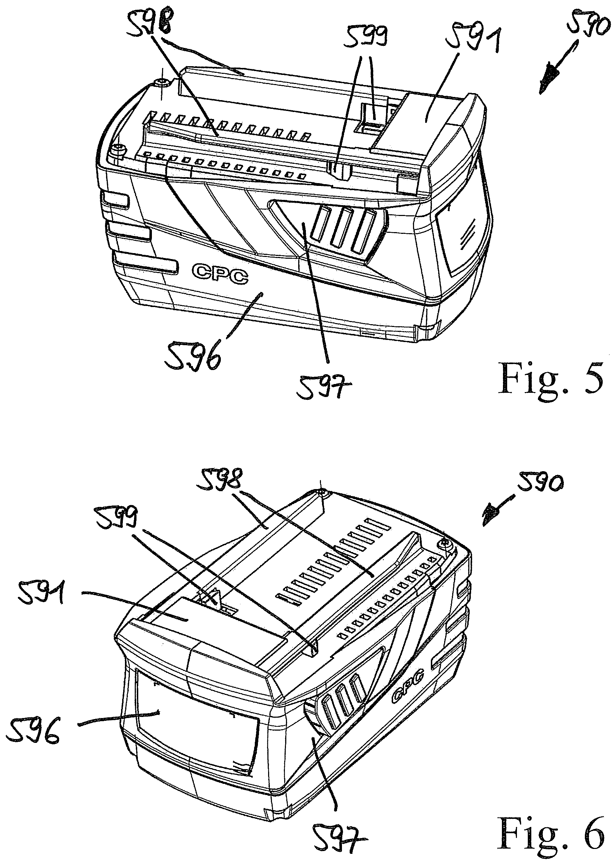

Fig. 5 zeigt den als Akku 590 ausgebildeten elektrischen Energiespeicher in einer Schrägansicht. Der Akku 590 weist ein Akkugehäuse 596 mit einer Griffmulde 597 für eine verbesserte Greifbarkeit des Akkus 590 auf. Weiterhin weist der Akku 590 zwei Halteschienen 598 auf, mit welchen der Akku 590 ähnlich wie ein Schlitten in nicht dargestellte korrespondierende Haltenuten eines Gehäuses einführbar ist. Für einen elektrischen Anschluss weist der Akku 590 nicht dargestellte Akkukontakte auf, welche unter einer vor Spritzwasser schützenden Kontaktabdeckung 591 angeordnet sind.

Fig. 6 zeigt den Akku 590 in einer weiteren Schrägansicht. An den Halteschienen 598 sind Rastnasen 599 vorgesehen, welche ein Herausfallen des Akkus 590 aus dem Gehäuse verhindern. Sobald der Akku 590 in das Gehäuse eingeführt ist, werden die Rastnasen 599 durch eine korrespondierende Geometrie der Nuten gegen eine Federkraft zur Seite geschoben und eingerastet. Durch Zusammendrücken der Griffmulden wird die Verrastung gelöst, so dass der Akku 590 mit Hilfe von Daumen und Fingern einer Hand durch einen Benutzer von dem Gehäuse abnehmbar ist.

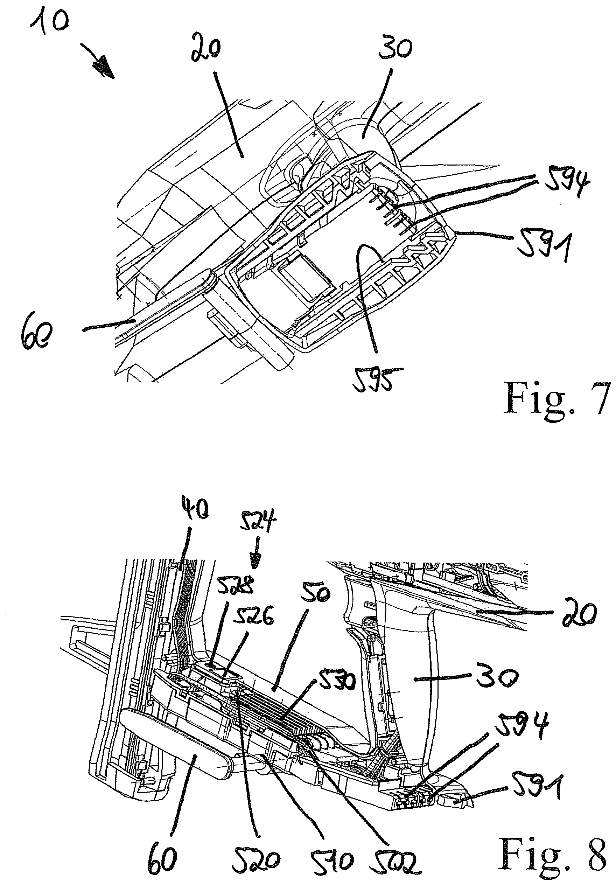

Fig. 7 zeigt die Eintreibvorrichtung 10 mit dem Gehäuse 20 in einer Teilansicht. Das Gehäuse 20 weist einen Griff 30 sowie eine von dem Griff an dessen Ende im Wesentlichen senkrecht abragende Brücke 50 mit einem daran befestigten Gerüsthaken 60 auf. Weiterhin weist das Gehäuse 20 eine Akkuaufnahme 591 zur Aufnahme eines Akkus auf. Die Akkuaufnahme 591 ist an dem Ende des Griffes 30 angeordnet, von welchem die Brücke abragt.

Die Akkuaufnahme 591 weist zwei Haltenuten 595 auf, in welche nicht dargestellte korrespondierende Halteschienen eines Akkus einführbar sind. Für einen elektrischen Anschluss des Akkus weist die Akkuaufnahme 591 mehrere als Gerätekontakte 594 ausgebildete Kontaktelemente auf, welche Leistungskontaktelemente und Kommunikationskontaktelemente umfassen. Die Akkuaufnahme 591 eignet sich beispielsweise zur Aufnahme des in Fig. 5 und Fig. 6 gezeigten Akkus.

Fig. 8 zeigt die Eintreibvorrichtung 10 mit geöffnetem Gehäuse 20 in einer Teilansicht. In der Brücke 50 des Gehäuses 20, welche den Griff 30 mit dem Magazin 40 verbindet, ist eine Steuereinrichtung 500 angeordnet, welche in einem Steuerungsgehäuse 510 aufgenommen ist. Die Steuereinrichtung umfasst eine Leistungselektronik 520 und ein Kühlelement 530 zur Kühlung der Steuereinrichtung, insbesondere der Leistungselektronik 520.

Das Gehäuse 20 weist eine Akkuaufnahme 591 mit Gerätekontakten 594 für einen elektrischen Anschluss eines nicht dargestellten Akkus auf. Ein in der Akkuaufnahme 591 aufgenommener Akku ist über Akkuleitungen 502 mit der Steuereinrichtung 500 elektrisch verbunden und versorgt so die Eintreibvorrichtung 10 mit elektrischer Energie.

Weiterhin weist das Gehäuse 20 eine Kommunikationsschnittstelle 524 mit einer für einen Benutzer der Vorrichtung sichtbaren Anzeige 526 und einer vorzugsweise optischen Datenschnittstelle 528 für einen optischen Datenaustausch mit einem Auslesegerät.

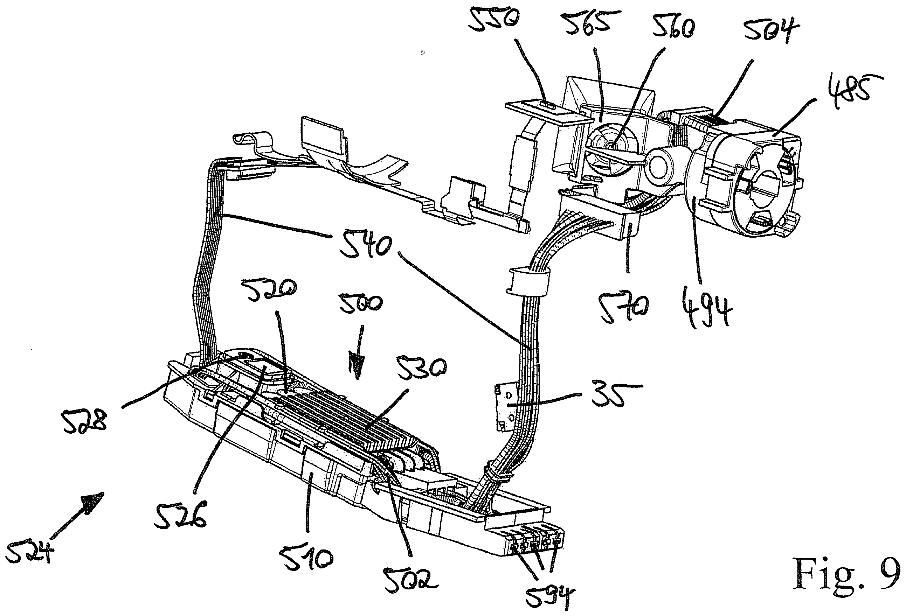

Fig. 9 zeigt die Steuereinrichtung 500 und die von der Steuereinrichtung 500 ausgehende Verkabelung in einer Eintreibvorrichtung in einer Schrägansicht. Die Steuereinrichtung 500 ist mit der Leistungselektronik 520 und dem Kühlelement 530 in dem Steuerungsgehäuse 510 aufgenommen. Die Steuereinrichtung 500 ist über Akkuleitungen 502 mit Gerätekontakten 594 für einen elektrischen Anschluss eines nicht dargestellten Akkus verbunden.

Kabelstränge 540 dienen der elektrischen Verbindung der Steuereinrichtung 500 mit einer Vielzahl von Komponenten der Eintreibvorrichtung wie beispielsweise Motoren, Sensoren, Schalter, Schnittstellen oder Anzeigeelementen. Beispielsweise ist die Steuereinrichtung 500 mit dem Anpresssensor 550, dem Handschalter 35, einem Lüfterantrieb 560 eines Lüfters 565 und über Phasenleitungen 504 und einen Motorhalter 485 mit einem nicht dargestellten Elektromotor, welcher von dem Motorhalter gehalten wird, verbunden.

Um eine Kontaktierung der Phasenleitungen 504 vor einer Schädigung aufgrund Bewegungen des Motors 480 zu schützen, sind die Phasenleitungen 504 in einem motorseitigen Zugentlastungselement 494 und in einem in der Zeichnung verdeckten gehäuseseitigen Zugentlastungselement festgelegt, wobei das motorseitige Zugentlastungselement direkt oder indirekt an dem Motorhalter 485 befestigt ist und das gehäuseseitige Zugentlastungselement direkt oder indirekt an einem nicht dargestellten Gehäuse der Eintreibvorrichtung, insbesondere einem Motorgehäuse des Motors befestigt ist.

Der Motor, der Motorhalter 485, die Zugentlastungselemente 494, der Lüfter 565 und der Lüfterantrieb 560 sind in dem Motorgehäuse 24 aus Fig. 2 aufgenommen. Das Motorgehäuse 24 ist gegenüber dem übrigen Gehäuse mittels der Leitungsdichtung 570 insbesondere gegen Staub abgedichtet.

Da die Steuereinrichtung 500 auf der selben Seite des nicht dargestellten Griffes angeordnet ist wie die Gerätekontakte 594, sind die Akkuleitungen 502 kürzer als die durch den Griff verlaufenden Phasenleitungen 504. Da die Akkuleitungen eine grössere Stromstärke transportieren und einen grösseren Querschnitt aufweisen als die Phasenleitungen, ist eine Verkürzung der Akkuleitungen auf Kosten einer Verlängerung der Phasenleitungen insgesamt vorteilhaft.

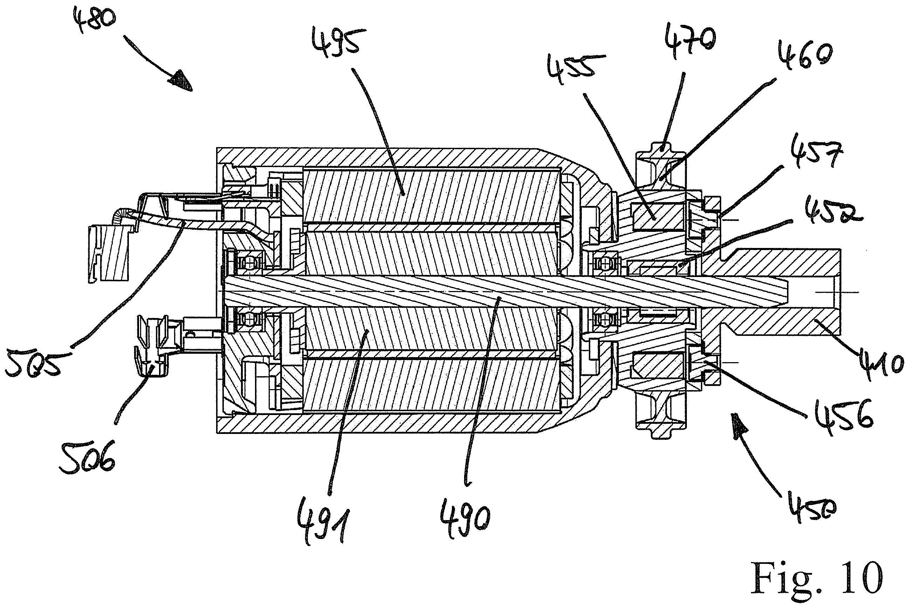

Fig. 10 zeigt einen elektrischen Motor 480 mit einem Motorabtrieb 490 in einem Längsschnitt. Der Motor 480 ist als bürstenloser Gleichstrommotor ausgebildet und weist Motorspulen 495 zum Antreiben des Motorabtriebs 490, welcher einen Permanentmagneten 491 umfasst, auf. Der Motor 480 wird von einem nicht dargestellten Motorhalter gehalten und mittels der Crimpkontakte 506 mit elektrischer Energie versorgt und mittels der Steuerleitung 505 gesteuert.

An dem Motorabtrieb 490 ist ein als Motorritzel 410 ausgebildetes motorseitiges Drehelement durch einen Presssitz drehfest befestigt. Das Motorritzel 410 wird von dem Motorabtrieb 490 angetrieben und treibt seinerseits eine nicht dargestellte Drehmomentübertragungseinrichtung an. Eine Halteeinrichtung 450 ist einerseits mittels eines Lagers 452 auf dem Motorabtrieb 490 drehbar gelagert und andererseits mittels eines ringförmigen Montageelementes 470 an dem Motorgehäuse drehfest angebunden. Zwischen der Halteeinrichtung 450 und dem Montageelement 470 ist ein ebenfalls ringförmiges Motordämpfungselement 460 angeordnet, welches der Dämpfung von Relativbewegungen zwischen dem Motor 480 und dem Motorgehäuse dient.

Vorzugsweise dient das Motordämpfungselement 460 alternativ oder gleichzeitig der Dichtung gegen Staub und dergleichen. Zusammen mit der Leitungsdichtung 570 wird das Motorgehäuse 24 gegenüber dem übrigen Gehäuse abgedichtet, wobei der Lüfter 565 durch die Lüftungsschlitze 33 Luft zur Kühlung des Motors 480 ansaugt und die übrige Antriebseinrichtung vor Staub geschützt ist.

Die Halteeinrichtung 450 weist eine Magnetspule 455 auf, welche bei Bestromung eine Anziehungskraft auf einen oder mehrere Magnetanker 456 ausübt. Die Magnetanker 456 erstrecken sich in als Durchbrüche ausgebildete Ankerausnehmungen 457 des Motorritzels 410 und sind somit drehfest an dem Motorritzel 410 und damit an dem Motorabtrieb 490 angeordnet. Aufgrund der Anziehungskraft werden die Magnetanker 456 gegen die Halteeinrichtung 450 gedrückt, so dass eine Drehbewegung des Motorabtriebs 490 gegenüber dem Motorgehäuse abgebremst oder verhindert wird.

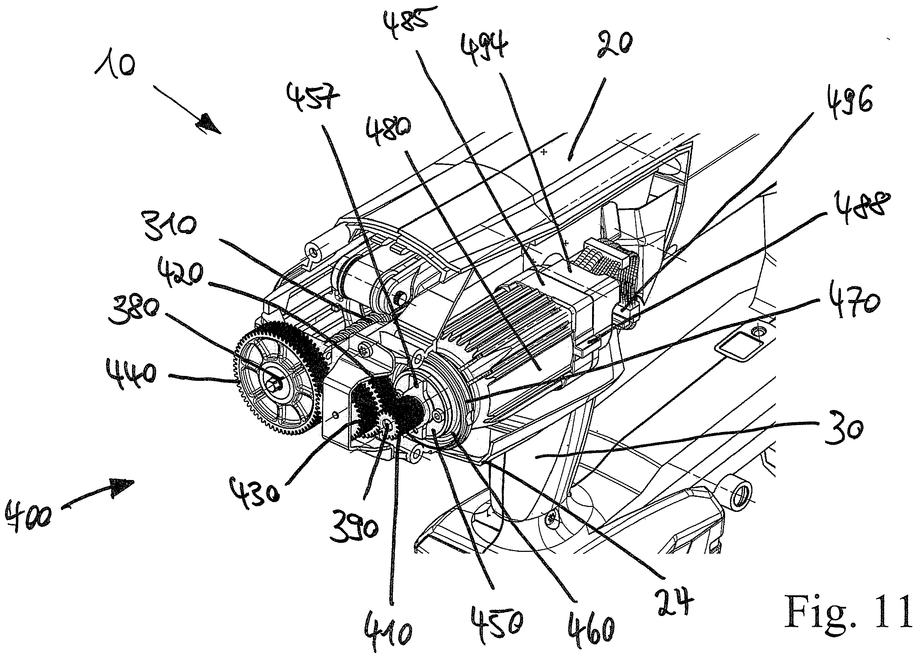

Fig. 11 zeigt die Eintreibvorrichtung 10 in einer weiteren Teilansicht. Das Gehäuse 20 weist den Griff 30 und das Motorgehäuse 24 auf. In dem nur teilweise dargestellten Motorgehäuse 24 ist der Motor 480 mit der Motorhalterung 485 aufgenommen. Auf dem nicht dargestellten Motorabtrieb des Motors 480 sitzt das Motorritzel 410 mit der Ankerausnehmung 457 und die Halteeinrichtung 450.

Das Motorritzel 410 treibt Zahnräder 420, 430 einer als Getriebe 400 ausgebildeten Drehmomentübertragungseinrichtung an. Das Getriebe 400 überträgt ein Drehmoment des Motors 480 auf ein Spindelrad 440, welches drehfest mit einem als Spindel 310 ausgebildeten Drehantrieb eines nicht weiter dargestellten Bewegungsumwandlers verbunden ist. Das Getriebe 400 weist eine Untersetzung auf, so dass ein grösseres Drehmoment auf die Spindel 310 ausgeübt wird als auf den Motorabtrieb 490.

Um den Motor 480 vor grossen Beschleunigungen zu schützen, welche während eines Eintreibvorganges in der Eintreibvorrichtung 10, insbesondere in dem Gehäuse 20 auftreten, ist der Motor 480 von dem Gehäuse 20 und dem Spindeltrieb entkoppelt. Da eine Drehachse 390 des Motors 480 parallel zu einer Setzachse 380 der Eintreibvorrichtung 10 orientiert ist, ist eine Entkopplung des Motors 480 in Richtung der Drehachse 390 wünschenswert. Dies wird dadurch bewerkstelligt, dass das Motorritzel 410 und das direkt von dem Motorritzel 410 angetriebene Zahnrad 420 gegeneinander in Richtung der Setzachse 380 und der Drehachse 390 verschiebbar angeordnet sind.

Der Motor 480 ist somit lediglich über das Motordämpfungselement 460 an dem gehäusefesten Montageelement 470 und damit an dem Gehäuse 20 befestigt. Das Montageelement 470 ist mittels einer Kerbe 475 verdrehgesichert in einer entsprechenden Gegenkontur des Gehäuses 20 gehalten. Darüber hinaus ist der Motor nur in Richtung seiner Drehachse 390 verschiebbar gelagert, nämlich über das Motorritzel 410 an dem Zahnrad 420 und über ein Führungselement 488 des Motorhalters 485 an einer entsprechend geformten, nicht dargestellten Motorführung des Motorgehäuses 24.

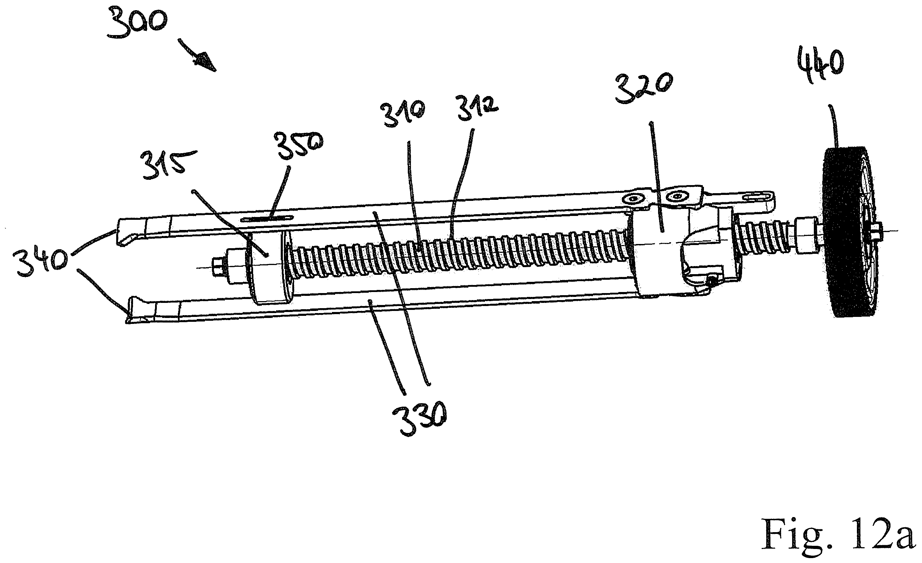

Fig. 12a zeigt einen als Spindeltrieb 300 ausgebildeten Bewegungsumwandler in einer Schrägansicht. Der Spindeltrieb 300 weist einen als Spindel 310 ausgebildeten Drehantrieb sowie einen als Spindelmutter 320 ausgebildeten Linearabtrieb auf. Ein nicht dargestelltes Innengewinde der Spindelmutter 320 steht dabei mit einem Aussengewinde 312 der Spindel in Eingriff.

Wird nun die Spindel 310 über das drehfest an der Spindel 310 befestigte Spindelrad 440 drehend angetrieben, bewegt sich die Spindelmutter 320 linear auf der Spindel 310 entlang. Die Drehbewegung der Spindel 310 wird somit in eine Linearbewegung der Spindelmutter 320 umgewandelt. Um ein Mitdrehen der Spindelmutter 320 mit der Spindel 310 zu verhindern, weist die Spindel 320 eine Verdrehsicherung in Form von an der Spindelmutter 320 befestigten Mitnahmeelementen 330 auf. Die Mitnahmeelemente 330 sind dazu in nicht gezeigten Führungsschlitzen eines Gehäuses oder einer gehäusefesten Komponente der Eintreibvorrichtung geführt.

Weiterhin sind die Mitnahmeelemente 330 als Rückholstangen für ein Zurückholen eines nicht dargestellten Kolbens in dessen Ausgangsstellung ausgebildet und weisen Widerhaken 340 auf, welche in korrespondierende Rückholzapfen des Kolbens eingreifen. Eine schlitzförmige Magnetaufnahme 350 dient der Aufnahme eines nicht dargestellten Magnetankers, auf welchen ein nicht dargestellter Spindelsensor anspricht, um eine Stellung der Spindelmutter 320 auf der Spindel 310 zu erfassen.

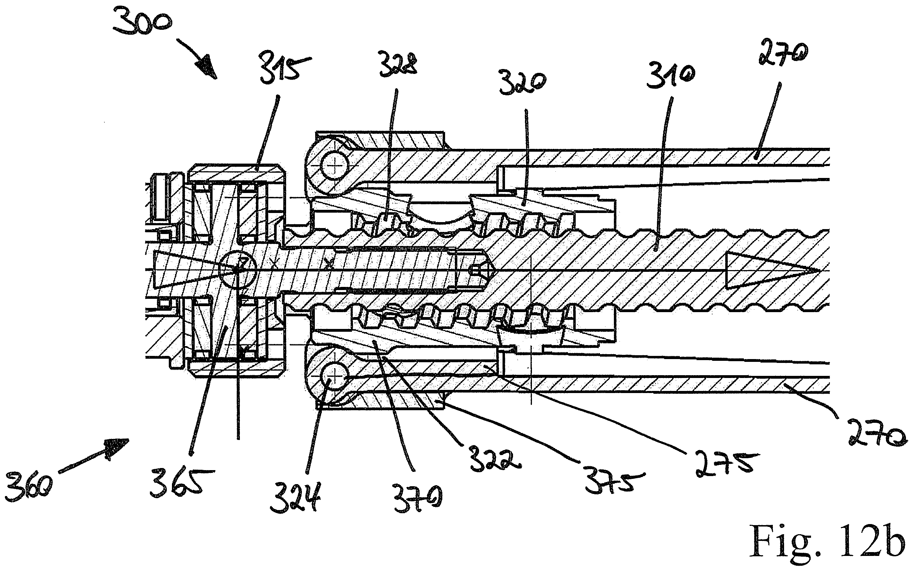

Fig. 12b zeigt den Spindeltrieb 300 mit der Spindel 310 und der Spindelmutter 320 in einem Teillängsschnitt. Die Spindelmutter weist ein Innengewinde 328 auf, welches mit dem Aussengewinde 312 der Spindel in Eingriff steht.

Ein als Band 270 ausgebildeter Kraftumlenker einer Kraftübertragungseinrichtung zur Übertragung einer Kraft von der Spindelmutter 320 auf einen nicht dargestellten mechanischen Energiespeicher ist an der Spindelmutter 320 befestigt. Hierzu weist die Spindelmutter 320 neben einer innen liegenden Gewindehülse 370 eine aussen liegende Klemmhülse 375 auf, wobei ein zwischen der Gewindehülse 370 und der Klemmhülse 375 umlaufender Spalt eine Durchführung 322 bildet. Das Band 270 ist durch die Durchführung 322 hindurch geführt und an einem Riegelelement 324 festgelegt, indem das Band 270 das Riegelelement 324 umgreift und wieder durch die Durchführung 322 zurückgeführt ist, wo ein Bandende 275 mit dem Band 270 vernäht ist. Vorzugsweise ist das Riegelelement ebenso wie die Durchführung 322 umlaufend als Verriegelungsring ausgebildet.

Quer zu der Durchführung 322, also bezüglich einer Spindelachse 311 in radialer Richtung, weist das Verriegelungselement 324 zusammen mit der gebildeten Bandschlaufe 278 eine grössere Breite auf als die Durchführung 322. Somit kann das Verriegelungselement 324 mit der Bandschlaufe 278 nicht durch die Durchführung 322 hindurch rutschen, so dass das Band 270 an der Spindelmutter 320 befestigt ist.

Durch die Befestigung des Bandes 270 an der Spindelmutter 320 wird gewährleistet, dass eine Spannkraft des nicht dargestellten mechanischen Energiespeichers, welcher insbesondere als Feder ausgebildet ist, von dem Band 270 umgelenkt und direkt auf die Spindelhülse 320 übertragen wird. Die Spannkraft wird von der Spindelmutter 320 über die Spindel 310 und einen Zuganker 360 auf eine nicht dargestellte Kupplungseinrichtung übertragen, welche einen ebenfalls nicht dargestellten, eingekuppelten Kolben hält. Der Zuganker weist einen Spindeldorn 365 auf, welcher einerseits mit der Spindel 310 fest verbunden und andererseits in einem Spindellager 315 drehbar gelagert ist.

Da die Spannkraft auch auf den Kolben ausgeübt wird, jedoch in entgegen gesetzter Richtung, heben sich die Zugkräfte, welche auf den Zuganker 360 ausgeübt werden, im Wesentlichen auf, so dass ein nicht dargestelltes Gehäuse, an welchem der Zuganker 360 abgestützt, insbesondere befestigt ist, entlastet wird. Das Band 270 und die Spindelmutter 320 beaufschlagen sich gegenseitig mit der Spannkraft, während der Kolben auf ein nicht dargestelltes Befestigungselement zu beschleunigt wird.

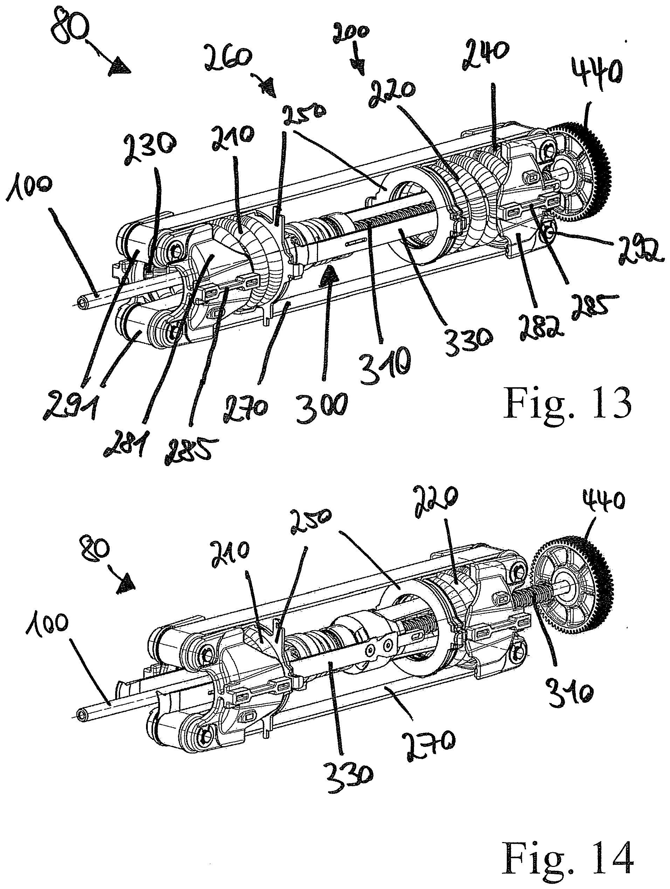

Fig. 13 zeigt eine als Rollenzug 260 ausgebildete Kraftübertragungseinrichtung zur Übertragung einer Kraft auf eine Feder 200 in einer Schrägansicht. Der Rollenzug 260 weist einen durch ein Band 270 gebildeten Kraftumlenker sowie einen vorderen Rollenhalter 281 mit vorderen Rollen 291 und einen hinteren Rollenhalter 282 mit hinteren Rollen 292 auf. Die Rollenhalter 281, 282 sind vorzugsweise aus einem insbesondere faserverstärkten Kunststoff gefertigt. Die Rollenhalter 281, 282 weisen Führungsschienen 285 für eine Führung der Rollenhalter 281, 282 in einem nicht dargestellten Gehäuse der Eintreibvorrichtung, insbesondere in Nuten des Gehäuses auf.

Das Band steht mit der Spindelmutter sowie einem Kolben 100 in Eingriff und ist über die Rollen 291, 292 gelegt, so dass der Rollenzug 260 gebildet ist. Der Kolben 100 ist in einer nicht dargestellten Kupplungseinrichtung eingekuppelt. Der Rollenzug bewirkt eine Übersetzung einer Geschwindigkeit der Federenden 230, 240 in eine Geschwindigkeit des Kolbens 100 um einen Faktor zwei.

Weiterhin ist eine Feder 200 gezeigt, welche ein vorderes Federelement 210 und ein hinteres Federelement 220 umfasst. Das vordere Federende 230 des vorderen Federelementes 210 ist in dem vorderen Rollenhalter 281 aufgenommen, während das hintere Federende 240 des hinteren Federelementes 220 in dem hinteren Rollenhalter aufgenommen ist. Die Federelemente 210, 220 sind an ihren aufeinander zugewandten Seiten an Stützringen 250 abgestützt. Durch die symmetrische Anordnung der Federelemente 210, 220 heben sich Rückstosskräfte der Federelemente 210, 220 auf, so dass der Bedienkomfort der Eintreibvorrichtung verbessert ist.

Weiterhin ist ein Spindeltrieb 300 mit einem Spindelrad 440, einer Spindel 310 und einer innerhalb des hinteren Federlementes 220 angeordneten Spindelmutter gezeigt, wobei ein an der Spindelmutter befestigtes Mitnahmeelement 330 zu sehen ist.

Fig. 14 zeigt den Rollenzug 260 in einem gespannten Zustand der Feder 200. Die Spindelmutter 320 befindet sich nun an dem kupplungsseitigen Ende der Spindel 310 und zieht das Band 270 in das hintere Federelement hinein. Dadurch werden die Rollenhalter 281, 282 aufeinander zubewegt und die Federelemente 210, 220 gespannt. Der Kolben 100 wird dabei von der Kupplungseinrichtung 150 gegen die Federkraft der Federelemente 210, 220 gehalten.

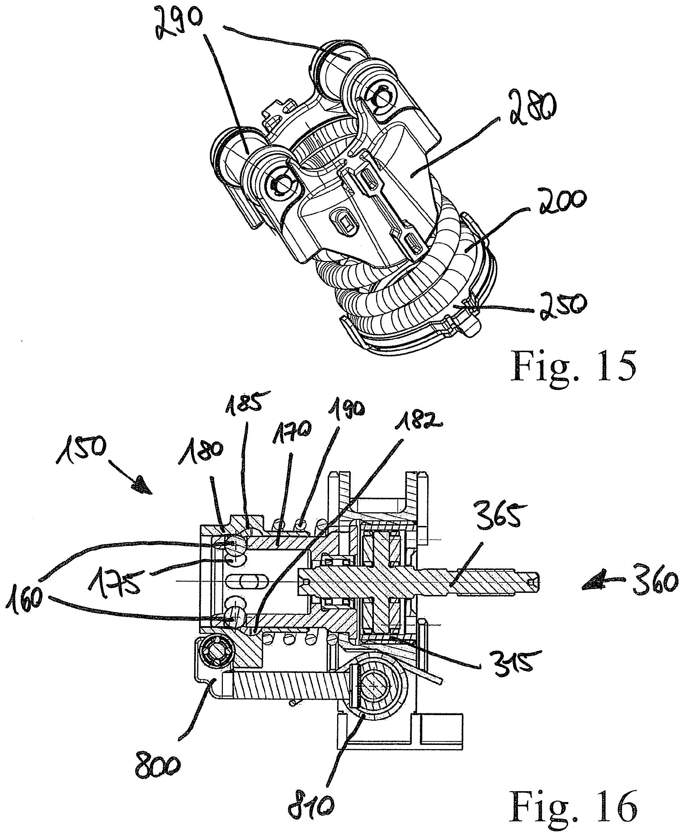

Fig. 15 zeigt eine Feder 200 in einer Schrägansicht. Die Feder 200 ist als Schraubenfeder ausgebildet und aus Stahl gefertigt. Ein Ende der Feder 200 ist in einem Rollenhalter 280 aufgenommen, das andere Ende der Feder 200 ist an einem Stützring 250 befestigt. Der Rollenhalter 280 weist Rollen 290 auf, welche auf der von der Feder 200 abgewandten Seite des Rollenhalters 280 von dem Rollenhalter 280 abragen. Die Rollen sind drehbar um zueinander parallele Achsen gelagert und erlauben einem nicht dargestellten Band, in das Innere der Feder 200 hineingezogen zu werden.

Fig. 16 zeigt eine Kupplungseinrichtung 150 für ein vorübergehendes Festhalten eines Energieübertragungselementes, insbesondere Kolbens, in einem Längsschnitt. Weiterhin ist der Zuganker 360 mit dem Spindellager 315 und dem Spindeldorn 365 gezeigt.

Die Kupplungseinrichtung 150 weist eine Innenhülse 170 und eine relativ zur Innenhülse 170 verschiebbare Aussenhülse 180 auf. Die Innenhülse 170 ist mit als Durchbrüche ausgebildeten Aussparungen 175 versehen, wobei in den Aussparungen 175 als Kugeln 160 ausgebildete Verriegelungselemente angeordnet sind. Um die Kugeln 160 an einem Herausfallen in einen Innenraum der Innenhülse 170 zu hindern, verjüngen sich die Aussparungen 175 nach innen insbesondere konisch zu einem Querschnitt, durch den die Kugeln 160 nicht hindurchpassen. Um die Kupplungseinrichtung 150 mit Hilfe der Kugeln 160 verriegeln zu können, weist die Aussenhülse 180 eine Stützfläche 185 auf, an denen die Kugeln 160 in einem verriegelten Zustand der Kupplungseinrichtung 150, wie in Fig. 16 gezeigt, nach aussen abgestützt sind.

In dem verriegelten Zustand ragen die Kugeln 160 daher in den Innenraum der Innenhülse hinein und halten den Kolben in der Kupplung. Ein als Klinke 800 ausgebildetes Halteelement hält dabei die Aussenhülse in der dargestellten Stellung gegen die Federkraft einer Rückstellfeder 190. Die Klinke ist dabei durch eine Klinkenfeder 810 gegen die Aussenhülse 180 vorgespannt und hintergreift einen von der Aussenhülse 180 abragenden Kupplungszapfen.

Zum Freigeben der Kupplungseinrichtung 150 wird, beispielsweise durch das Betätigen eines Abzugs, die Klinke 800 gegen die Federkraft der Klinkenfeder 810 von der Aussenhülse 180 wegbewegt, so dass die Aussenhülse 180 von der Rückstellfeder 190 in der Zeichnung nach links bewegt wird. Die Aussenhülse 180 weist an ihrer Innenseite Vertiefungen 182 auf, welche dann die Kugeln 160 aufnehmen können, welche entlang den geneigten Stützflächen in die Vertiefungen 182 hineinrutschen und den Innenraum der Innenhülse freigeben.

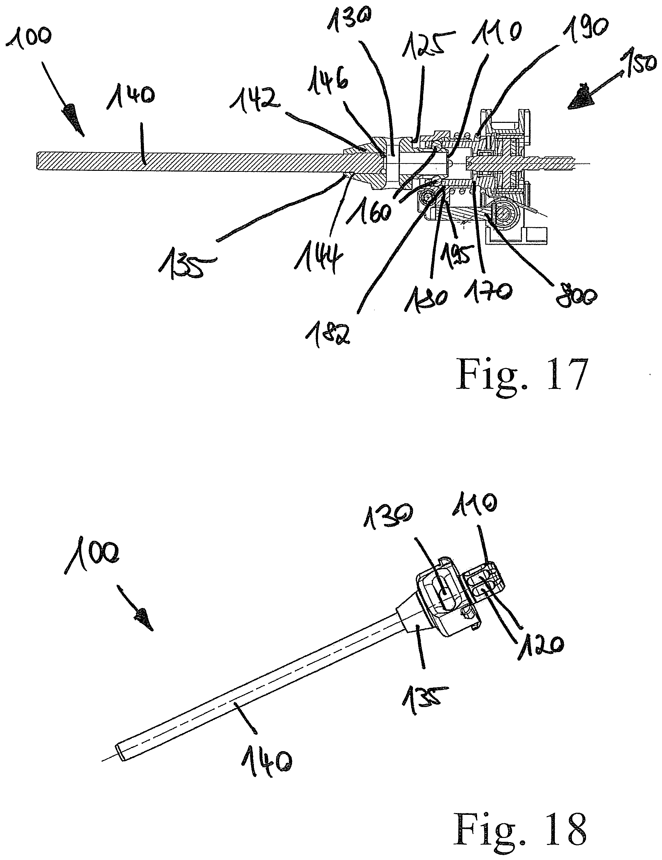

Fig. 17 zeigt einen weiteren Längsschnitt der Kupplungseinrichtung 150 mit eingekuppeltem Kolben 100. Der Kolben weist hierzu ein Kupplungssteckteil 110 mit Kupplungsausnehmungen 120 auf, in welche die Kugeln 160 der Kupplungseinrichtung 150 einrasten können. Weiterhin weist der Kolben 100 einen Absatz 125 sowie eine Banddurchführung 130 und einen konvexkonischen Abschnitt 135 auf. Die Kugeln 160 bestehen aus vorzugsweise gehärtetem Stahl.

Ein Einkuppeln des Kolbens 100 in die Kupplungseinrichtung 150 beginnt in einem entriegelten Zustand der Kupplungseinrichtung 150, in welchem die durch die Rückstellfeder 190 beaufschlagte Aussenhülse 180 ein Aufnehmen der Kugeln 160 in die Vertiefungen 182 erlaubt. Der Kolben 100 kann daher beim Einführen des Kolbens 100 in die Innenhülse 170 die Kugeln 160 nach aussen verdrängen. Mit Hilfe des Absatzes 125 verschiebt der Kolben 100 dann die Aussenhülse 180 gegen die Kraft der Rückstellfeder 190. Sobald die Klinke 800 mit dem Kupplungszapfen 195 in Eingriff steht, wird die Kupplungseinrichtung 150 in dem verriegelten Zustand gehalten.

Der Kolben 100 umfasst einen Schaft 140 und einen Kopf 142, wobei der Schaft 140 und der Kopf 142 vorzugsweise miteinander verlötet sind. Ein Formschluss in Form eines Absatzes 144 verhindert ein Herausrutschen des Schaftes 140 aus dem Kopf 142 im Falle eines Bruches der Lötverbindung 146.

Fig. 18 zeigt eine als Kolben 100 ausgebildete Energieübertragungseinrichtung in einer Schrägansicht. Der Kolben weist einen Schaft 140, einen konvexkonischen Abschnitt 135 und eine als Banddurchführung 130 ausgebildete Ausnehmung auf. Die Banddurchführung 130 ist als Langloch ausgeführt und weist zur Schonung des Bandes nur abgerundete Kanten und vergütete Oberflächen auf. An die Banddurchführung schliesst sich ein Kupplungssteckteil 110 mit Kupplungsausnehmungen 120 an.

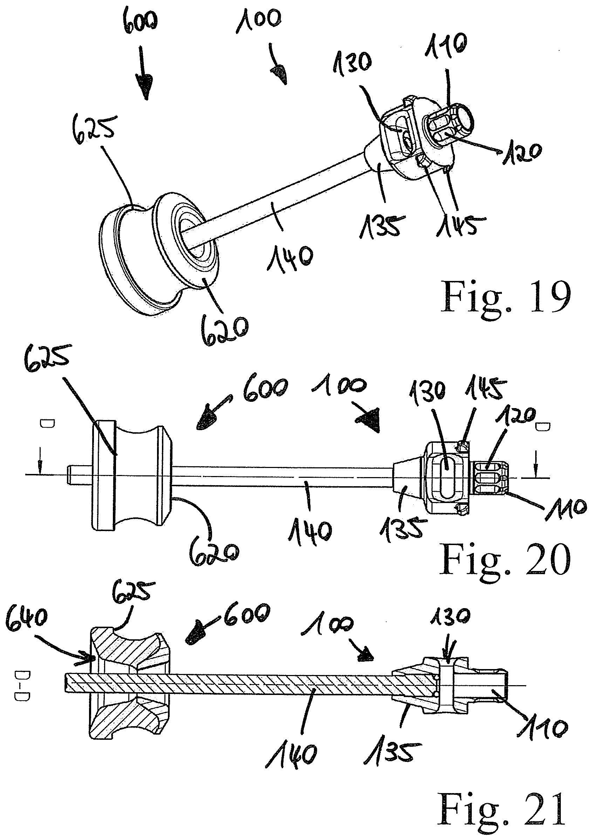

Fig. 19 zeigt den Kolben 100 zusammen mit einem Verzögerungselement 600 in einer Schrägansicht. Der Kolben weist einen Schaft 140, einen konvexkonischen Abschnitt 135 und eine als Banddurchführung 130 ausgebildete Ausnehmung auf. An die Banddurchführung schliesst sich ein Kupplungssteckteil 110 mit Kupplungsausnehmungen 120 an. Weiterhin weist der Kolben 100 mehrere Rückholzapfen 145 für einen Eingriff von nicht dargestellten Mitnahmeelementen, beispielsweise zugehörig zu einer Spindelmutter.

Das Verzögerungselement 600 weist eine Anschlagfläche 620 für den konvexkonischen Abschnitt 135 des Kolbens 100 auf und ist einem nicht dargestellten Aufnahmeelement aufgenommen. Das Verzögerungselement 600 wird von einem nicht dargestellten Haltering in dem Aufnahmeelement gehalten, wobei der Haltering an einem Halteabsatz 625 des Verzögerungselementes 600 anliegt.

Fig. 20 zeigt den Kolben 100 zusammen mit dem Verzögerungselement 600 in einer Seitenansicht. Der Kolben weist einen Schaft 140, einen konvexkonischen Abschnitt 135 und eine Banddurchführung 130 auf. An die Banddurchführung schliesst sich ein Kupplungssteckteil 110 mit Kupplungsausnehmungen 120 an. Das Verzögerungselement 600 weist eine Anschlagfläche 620 für den konvexkonischen Abschnitt 135 des Kolbens 100 auf und ist in dem nicht dargestellten Aufnahmeelement aufgenommen.

Fig. 21 zeigt den Kolben 100 zusammen mit dem Verzögerungselement 600 in einem Längsschnitt. Die Anschlagfläche 620 des Verzögerungselementes 600 ist an die Geometrie des Kolbens 100 angepasst und weist daher ebenfalls einen konvexkonischen Abschnitt auf. Hierdurch wird ein flächiges Anschlagen des Kolbens 100 gegen das Verzögerungselement 600 gewährleistet. Somit wird überschüssige Energie des Kolbens 100 durch das Verzögerungselement ausreichend absorbiert. Weiterhin weist das Verzögerungselement 600 einen Kolbendurchgang 640 auf, durch den sich der Schaft 140 des Kolbens 100 hindurch erstreckt.

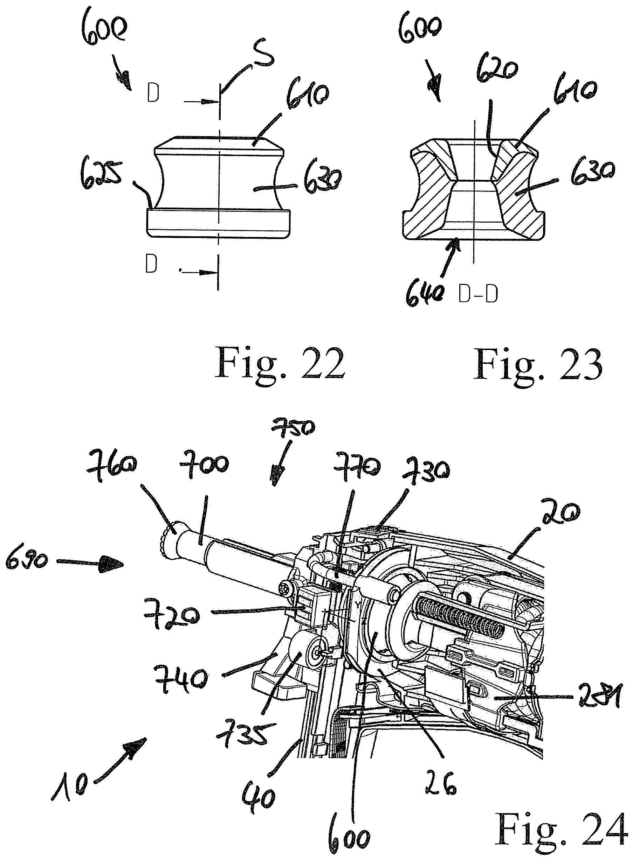

Fig. 22 zeigt das Verzögerungselement 600 in einer Seitenansicht. Das Verzögerungselement 600 weist ein Anschlagelement 610 sowie ein Schlagdämpfungselement 630 auf, welche entlang einer Setzachse S der Eintreibvorrichtung aneinander anschliessen. Überschüssige Schlagenergie eines nicht dargestellten Kolbens wird zunächst von dem Anschlagelement 610 aufgenommen und dann von dem Schlagdämpfungselement 630 gedämpft, das heisst zeitlich ausgedehnt. Die Schlagenergie wird schliesslich von dem nicht dargestellten Aufnahmeelement aufgenommen, welcher einen Boden als erste Stützwand zur Abstützung des Verzögerungselementes 600 in Schlagrichtung und eine Seitenwand als zweite Stützwand zur Abstützung des Verzögerungselementes 600 quer zu der Schlagrichtung aufweist.

Fig. 23 zeigt das Verzögerungselement 600 mit dem Halter 650 in einem Längsschnitt. Das Verzögerungselement 600 weist ein Anschlagelement 610 sowie ein Schlagdämpfungselement 630 auf, welche entlang einer Setzachse S der Eintreibvorrichtung aneinander anschliessen. Das Anschlagelement 610 besteht aus Stahl, das Schlagdämpfungselement 630 dagegen aus einem Elastomer. Eine Masse des Schlagdämpfungselementes 630 beträgt vorzugsweise zwischen 40% und 60% einer Masse des Anschlagelementes.

Fig. 24 zeigt die Eintreibvorrichtung 10 in einer Schrägansicht mit geöffnetem Gehäuse 20. In dem Gehäuse ist der vordere Rollenhalter 281 zu sehen. Das Verzögerungselement 600 wird von dem Haltering 26 in seiner Position gehalten. Die Nase 690 weist unter Anderem den Anpressfühler 760 und das Entsperrelement 720 auf. Die Anpresseinrichtung 750 weist den Führungskanal 700, welcher vorzugsweise den Anpressfühler 760 umfasst, und die Verbindungsstange 770 auf. Das Magazin 40 weist das Vorschubelement 740 und die Vorschubfeder 735 auf.

Weiterhin weist die Eintreibvorrichtung 10 einen Entriegelungsschalter 730 für eine Entriegelung des Führungskanals 700 auf, so dass der Führungskanal 700 abnehmbar ist, beispielsweise um verklemmte Befestigungselemente einfacher entfernen zu können.

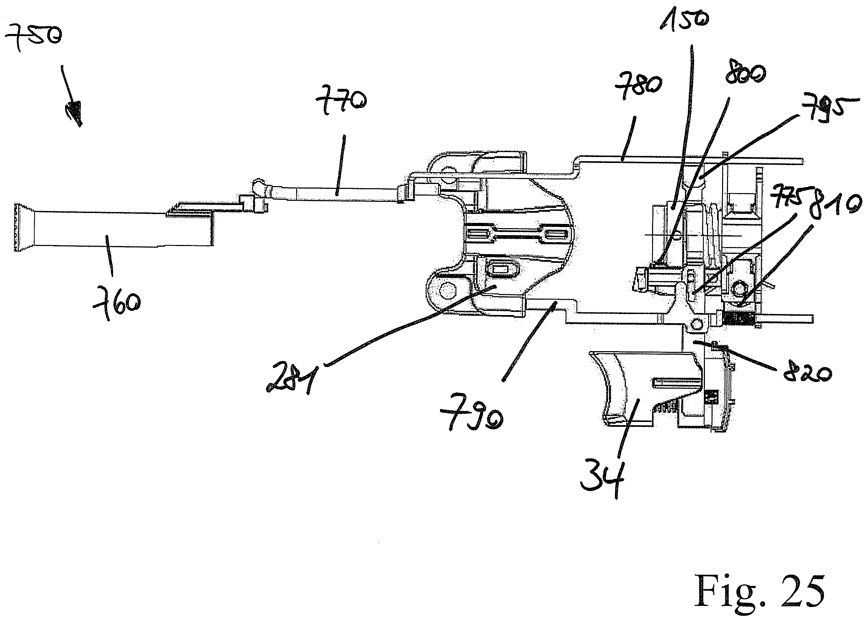

Fig. 25 zeigt eine Anpresseinrichtung 750 in einer Seitenansicht. Die Anpresseinrichtung umfasst einen Anpressfühler 760, eine obere Schubstange 780, eine Verbindungsstange 770 zur Verbindung der oberen Schubstange 780 mit dem Anpressfühler 760, eine mit einem vorderen Rollenhalter 281 verbundene untere Schubstange 790 und eine an die obere Schubstange 780 und an die untere Schubstange angelenkte Querstange 795. Eine Abzugsstange 820 ist an einem Ende mit einem Abzug 34 verbunden. Die Querstange 795 weist ein Langloch 775 auf. Weiterhin ist eine Kupplungseinrichtung 150 gezeigt, welche von einer Klinke 800 in einer verriegelten Stellung gehalten wird.

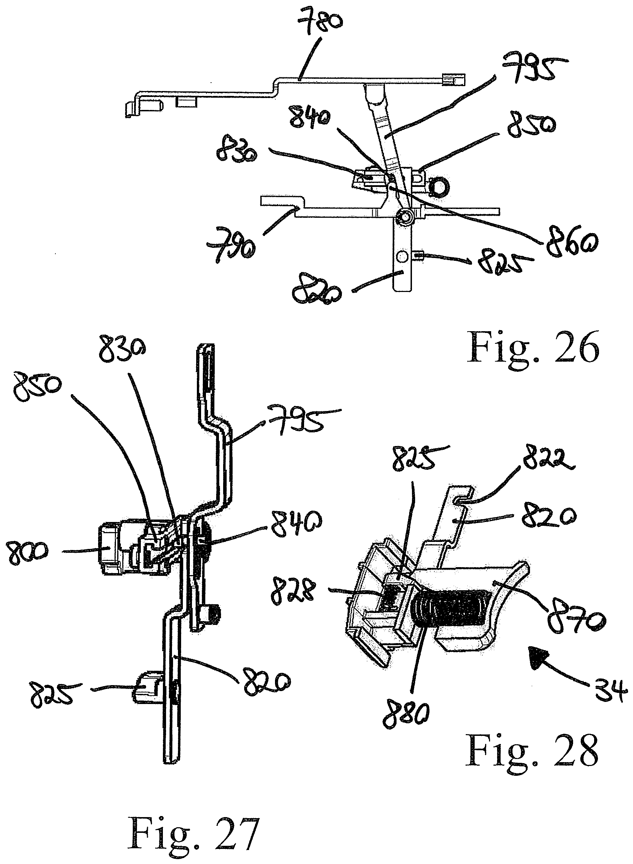

Fig. 26 zeigt eine Teilansicht der Anpresseinrichtung 750. Gezeigt ist die obere Schubstange 780, die untere Schubstange 790, die Querstange 795 und die Abzugsstange 820. Die Abzugsstange 820 weist einen von der Abzugsstange seitlich abragenden Abzugsumlenker 825 auf. Weiterhin gezeigt ist ein Zapfenelement 830, welches einen Abzugszapfen 840 aufweist und in einer Klinkenführung 850 geführt ist. Der Abzugszapfen 840 ist seinerseits in dem Langloch 775 geführt. Weiterhin wird deutlich, dass die untere Schubstange 790 eine Zapfensperre 860 aufweist.

Fig. 27 zeigt eine weitere Teilansicht der Anpresseinrichtung 750. Gezeigt ist die Querstange 795, die Abzugsstange 820 mit dem Abzugsumlenker 825, das Zapfenelement 830, der Abzugszapfen 840, die Klinkenführung 850 sowie die Klinke 800.

Fig. 28 zeigt den Abzug 34 und die Abzugsstange 820 in einer Schrägansicht, jedoch von der anderen Seite der Vorrichtung als die vorherigen Abbildungen. Der Abzug weist einen Abzugsbetätiger 870, eine Abzugsfeder 880 sowie eine Abzugsstangenfeder 828, welche den Abzugsumlenker 825 beaufschlagt, auf. Weiterhin wird deutlich, dass die Abzugsstange 820 seitlich mit einer Zapfenkerbe 822 versehen ist, welche auf Höhe des Abzugszapfens 840 angeordnet ist.

Um es einem Benutzer der Eintreibvorrichtung zu ermöglichen, durch Ziehen des Abzugs 34 einen Eintreibvorgang auszulösen, muss der Abzugszapfen 840 mit der Zapfenkerbe 822 in Eingriff stehen. Nur dann bewirkt nämlich eine Abwärtsbewegung der Abzugsstange 820 ein Mitnehmen des Abzugszapfens 840 und damit über die Klinkenführung 850 eine Abwärtsbewegung der Klinke 800, wodurch die Kupplungseinrichtung 150 entriegelt und der Eintreibvorgang ausgelöst wird. Ein Ziehen des Abzugs 34 bewirkt in jedem Fall über den angeschrägten Abzugsumlenker 825 eine Abwärtsbewegung der Abzugsstange 820.

Voraussetzung dafür, dass der Abzugszapfen 840 mit der Zapfenkerbe 822 in Eingriff steht, ist, dass das Langloch 775 in der Querstange 795 sich in seiner hintersten Position, also in der Zeichnung rechts, befindet. In der Position, welche beispielsweise in Fig. 26 gezeigt ist, befindet sich das Langloch 775 und somit auch der Abzugszapfen 840 zu weit vorne, so dass der Abzugszapfen 840 nicht mit der Zapfenkerbe 822 in Eingriff steht. Ein Ziehen des Abzugs 34 geht also ins Leere. Grund dafür ist, dass sich die obere Schubstange 780 in ihrer vorderen Position befindet und somit anzeigt, dass die Eintreibvorrichtung nicht an einen Untergrund angepresst ist.

Eine ähnliche Situation ergibt sich, wenn eine nicht dargestellte Feder nicht gespannt ist. Dann befindet sich nämlich der vordere Rollenhalter 281 und somit auch die untere Schubstange 790 in ihrer jeweiligen vorderen Position, so dass das Langloch 775 wiederum den Abzugszapfen 840 ausser Eingriff mit der Zapfenkerbe 822 bringt. Im Ergebnis geht ein Ziehen des Abzugs 34 auch dann ins Leere, wenn die Feder nicht gespannt ist.

Eine andere Situation ist in Fig. 25 dargestellt. Dort ist die Eintreibvorrichtung sowohl in einem eintreibbereiten Zustand, nämlich mit gespannter Feder, als auch an einen Untergrund angepresst. Folglich befinden sich die obere Schubstange 780 und die unter Schubstange 790 in ihrer jeweiligen hintersten Position. Das Langloch 775 der Querstange 795 und damit auch der Abzugszapfen 740 befinden sich dann ebenfalls in ihrer jeweiligen hintersten Position, in der Zeichnung rechts. In der Folge greift der Abzugszapfen 740 in die Zapfenkerbe 722 ein und ein Ziehen des Abzugs 34 bewirkt über die Abzugsstange 820 ein Mitnehmen des Abzugszapfens 740 durch die Zapfenkerbe 722 nach unten. Über das Zapfenelement 830 und die Klinkenführung 850 wird die Klinke 800 ebenfalls gegen die Federkraft der Klinkenfeder 810 nach unten ausgelenkt, so dass die Kupplungseinrichtung 150 in ihre entriegelte Stellung überführt wird und ein in der Kupplungseinrichtung 150 entriegelter Kolben die Spannenergie der Feder auf ein Befestigungselement überträgt.

Um der Gefahr entgegenzuwirken, dass die Klinke 800 durch eine Erschütterung ausgelenkt wird, beispielsweise wenn ein Benutzer die Eintreibvorrichtung in gespanntem Zustand der Feder unsanft abstellt, ist die untere Schubstange 790 mit der Zapfensperre 860 versehen. Die Eintreibvorrichtung ist dann nämlich in dem in Fig. 26 dargestellten Zustand. Dadurch , dass die Zapfensperre 860 den Zapfen 840 und damit die Klinke 800 an einer Abwärtsbewegung hindert, sichert die Eintreibvorrichtung gegen ein solches versehentliches Auslösen eines Eintreibvorganges.

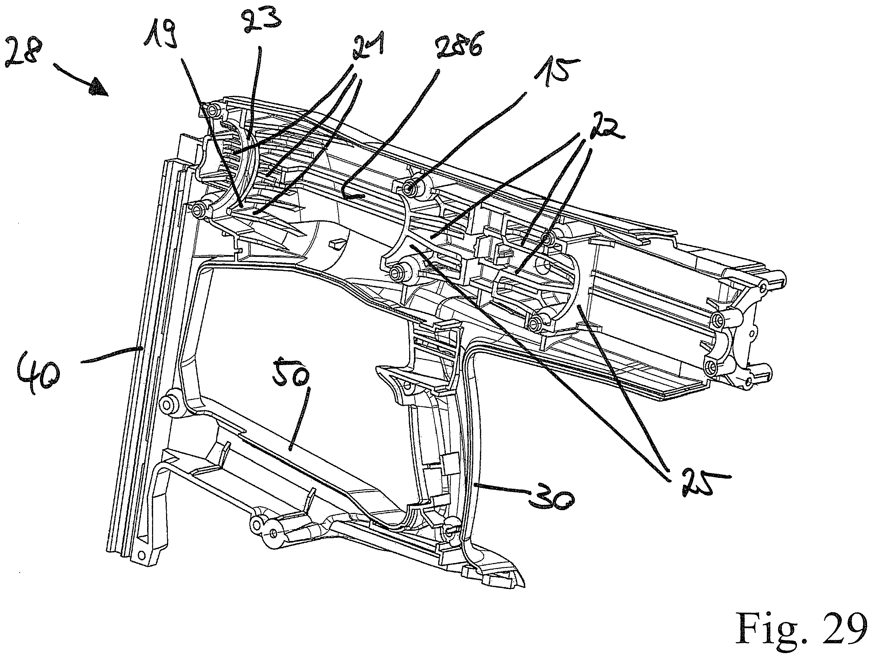

Fig. 29 zeigt die zweite Gehäuseschale 28 des ansonsten nicht weiter dargestellten Gehäuses. Die zweite Gehäuseschale 28 besteht aus einem insbesondere faserverstärkten Kunststoff und weist Teile des Griffes 30, des Magazins 40 und die den Griff 30 mit dem Magazin 40 verbindende Brücke 50 auf. Weiterhin weist die zweite Gehäuseschale 28 Stützelemente 15 für eine Abstützung gegenüber der nicht dargestellten ersten Gehäuseschale auf. Weiterhin weist die zweite Gehäuseschale 28 eine Führungsnut 286 für eine Führung von nicht gezeigten Rollenhaltern auf.

Zur Aufnahme eines nicht dargestellten Verzögerungselementes zum Verzögern eines Energieübertragungselementes beziehungsweise eines das Verzögerungselement tragenden Halters weist die zweite Gehäuseschale 28 einen Stützflansch 23 sowie einen Halteflansch 19 auf, wobei das Verzögerungselement beziehungsweise der Halter in einem Spalt 18 zwischen dem Stützflansch 23 und dem Halteflansch 19 aufgenommen ist. Das Verzögerungselement beziehungsweise der Halter ist dann insbesondere an dem Stützflansch abgestützt. Um Schlagkräfte, welche durch ein Aufschlagen des Kolbens auf das Verzögerungselement auftreten, mit reduzierten Spannungsspitzen in das Gehäuse einzuleiten, weist die zweite Gehäuseschale 28 erste Verstärkungsrippen 21 auf, welche mit dem Stützflansch 23 und/oder dem Halteflansch 19 verbunden sind.

Zur Befestigung einer Antriebseinrichtung zur Beförderung des Energieübertragungselementes von der Ausgangsstellung in die Setzstellung und zurück, welche in dem Gehäuse aufgenommen ist, weist die zweite Gehäuseschale 28 zwei als Flansche 25 ausgebildete Tragelemente auf. Um Spannkräfte, welche insbesondere zwischen den zwei Flanschen 25 auftreten, zu übertragen und/oder in das Gehäuse einzuleiten, weist die zweite Gehäuseschale 28 zweite Verstärkungsrippen 22 auf, welche mit den Flanschen 25 verbunden sind.

Der Halter ist nur über das Gehäuse an der Antriebseinrichtung befestigt, so dass Schlagkräfte, welche von dem Verzögerungselement nicht vollständig absorbiert werden, nur über das Gehäuse auf die Antriebseinrichtung übertragen werden.

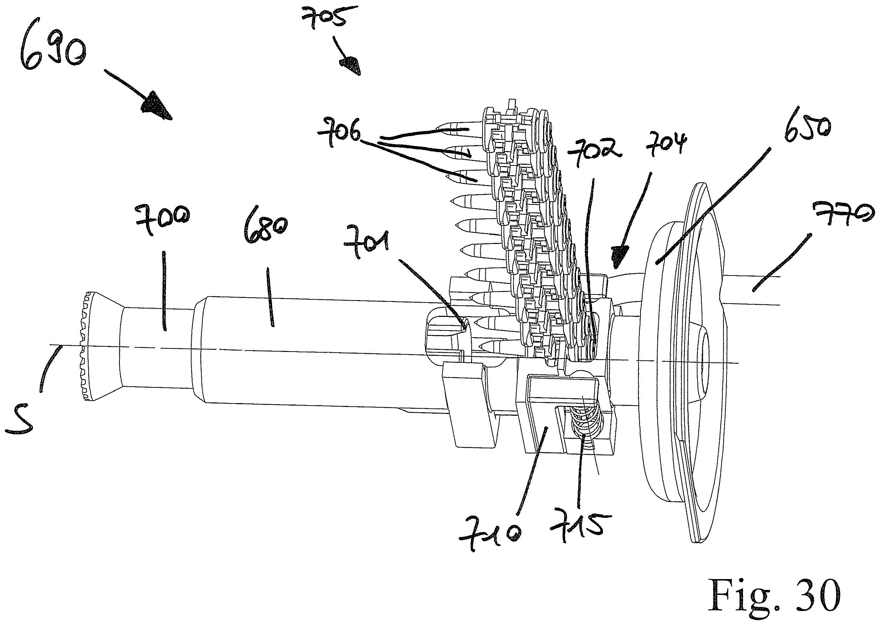

Fig. 30 zeigt eine Nase 690 einer Vorrichtung zum Eintreiben eines Befestigungselementes in einen Untergrund in einer Schrägansicht. Die Nase 690 umfasst einen Führungskanal 700 für eine Führung des Befestigungselementes mit einem hinteren Stirnende 701 und einen relativ zu dem Führungskanal 700 in Richtung der Setzachse verschiebbar angeordneten Halter 650 zum Halten eines nicht dargestellten Verzögerungselementes. Der Halter 650 weist eine Bolzenaufnahme 680 mit einer Zuführausnehmung 704 durch die hindurch ein Nagelstreifen 705 mit einer Vielzahl von Befestigungselementen 706 einem Abschussabschnitt 702 des Führungskanals 700 zuführbar ist. Der Führungskanal 700 dient gleichzeitig als Anpressfühler einer Anpresseinrichtung, welche eine Verbindungsstange 770 aufweist, welche bei einer Verschiebung des Führungskanals 700 ebenfalls verschoben wird und somit ein Anpressen der Vorrichtung an einen Untergrund anzeigt.

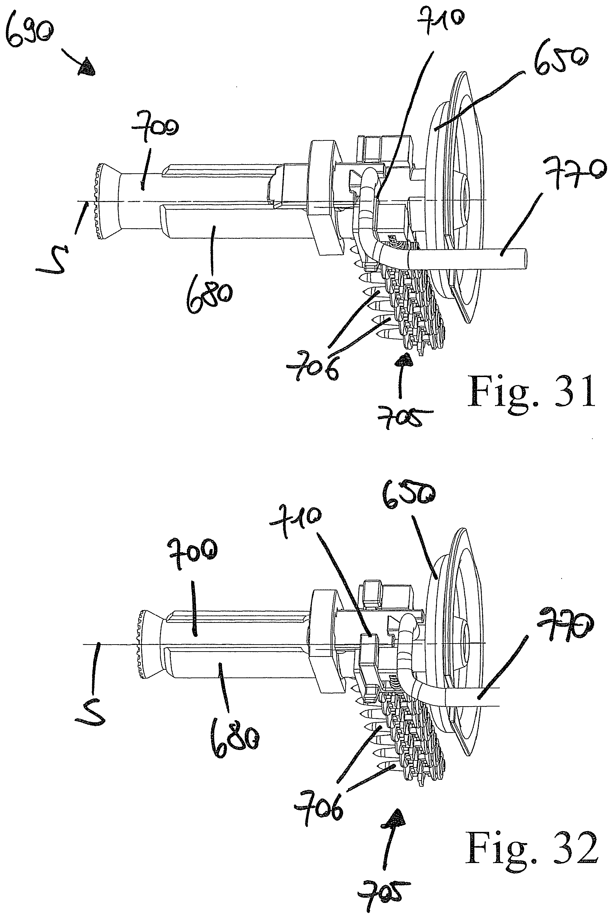

Fig. 31 zeigt die Nase 690 in einer weiteren Schrägansicht. Der Führungskanal 700 ist Teil einer Anpresseinrichtung zum Erkennen des Abstandes der Eintreibvorrichtung zu dem Untergrund in Richtung einer Setzachse S. Die Nase 690 weist weiterhin ein Sperrelement 710 auf, welches in einer Freigabestellung ein Verschieben des Führungskanals 700 zulässt und in einer Sperrstellung ein Verschieben des Führungskanals 700 verhindert. Das Sperrelement 710 ist von einer in der Zeichnung verdeckten Einrückfeder in einer Richtung auf den Nagelstreifen 705 zu belastet. Solange kein Befestigungselement in dem Abschussabschnitt 702 in dem Führungskanal 700 angeordnet ist, befindet sich das Sperrelement 710 in der Sperrstellung, in der es den Führungskanal 700 blockiert, wie in Fig. 31 dargestellt.

Fig. 32 zeigt die Nase 690 in einer weiteren Schrägansicht. Sobald ein Befestigungselement in dem Abschussabschnitt 702 in dem Führungskanal 700 angeordnet ist, befindet sich das Sperrelement 710 in einer Freigabestellung, in der es den Führungskanal 700 passieren lässt, wie in Fig. 32 dargestellt. Dadurch kann die Eintreibvorrichtung an den Untergrund angepresst werden. In diesem Fall wird die Verbindungsstange 770 verschoben, so dass das Anpressen das Auslösen eines Eintreibvorgangs gewährleisten kann.

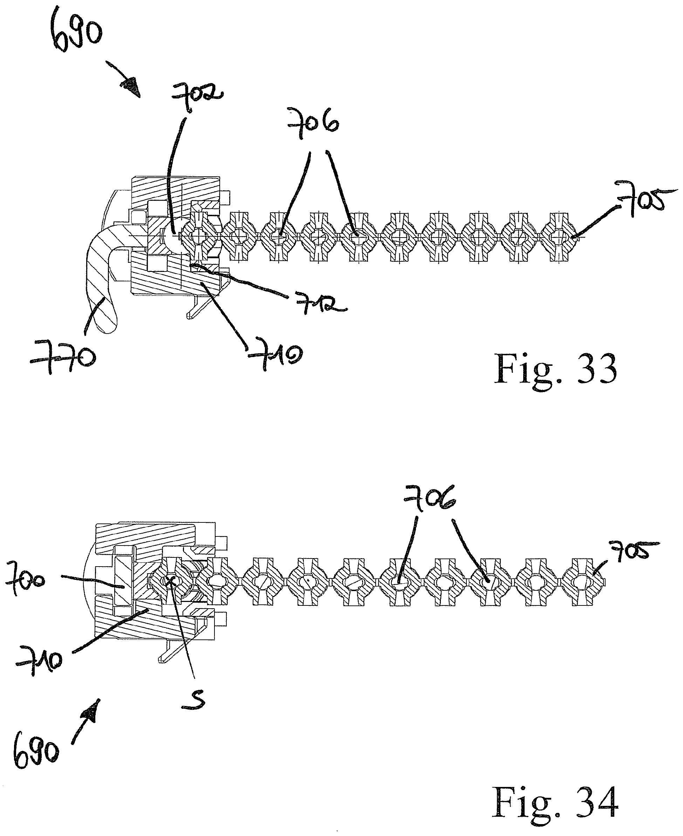

Fig. 33 zeigt die Nase 690 in einem Querschnitt. Der Führungskanal 700 weist einen Abschussabschnitt 702 auf. Das Sperrelement 710 weist benachbart zu dem Abschussabschnitt einen Sperrabsatz 712 auf, welcher von dem Nagelstreifen 705 oder auch einzelnen Nägeln beaufschlagbar ist.

Fig. 34 zeigt die Nase 690 in einem weiteren Querschnitt. Das Sperrelement 710 befindet sich in der Freigabestellung, so dass das Sperrelement 710 den Führungskanal 700 bei Bewegung in Richtung der Setzachse S passieren lässt.

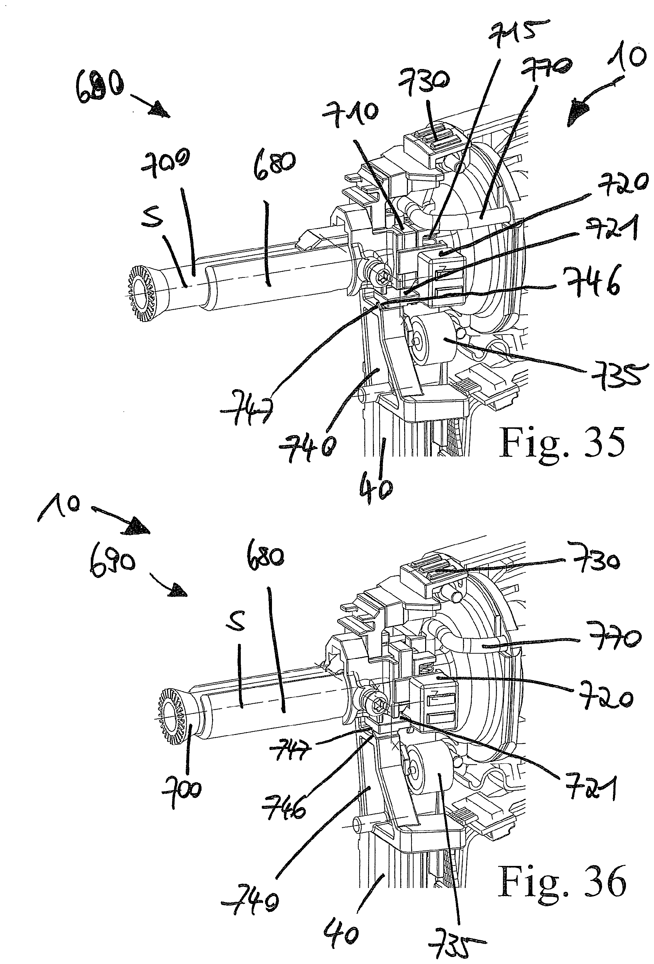

Fig. 35 zeigt eine Eintreibvorrichtung 10 mit der Nase 690 in einer Teilansicht. Die Nase 690 weist des Weiteren ein von aussen durch einen Benutzer betätigbares Entsperrelement 720, welches in einer Entsperrstellung das Sperrelement 710 in dessen Freigabestellung hält und in einer Wartestellung eine Bewegung des Sperrelementes in dessen Sperrstellung zulässt. Auf der vom Betrachter abgewandten Seite des Entsperrelementes 720 befindet sich eine nicht dargestellte Ausrückfeder, welche das Entsperrelement 720 von dem Sperrelement 710 weg beaufschlagt. Weiterhin ist der Entriegelungsschalter 730 gezeigt.

Fig. 36 zeigt die Eintreibvorrichtung 10 mit der Nase 690 in einer weiteren Teilansicht. Eine als Magazin 40 ausgeführte Zuführeinrichtung für Befestigungselemente zu dem Abschussabschnitt weist eine Vorschubfeder 735 sowie ein Vorschubelement 740 auf. Die Vorschubfeder 735 belastet das Vorschubelement 740 und somit auch gegebenenfalls in dem Magazin befindliche Befestigungselemente auf den Führungskanal 700 zu. Das Entsperrelement 720 weist an einem Fortsatz 721 des Entsperrelementes 720 ein erstes Rastelement 746 auf und das Vorschubelement 740 weist ein zweites Rastelement 747 auf. Das erste und das zweite Rastelement verrasten miteinander, wenn das Entsperrelement 720 in die Entsperrstellung bewegt wird. In diesem Zustand können einzelne Befestigungselemente entlang der Setzachse S in den Führungskanal 700 eingeführt werden. Sobald das Magazin 40 wieder geladen wird löst sich die Verrastung zwischen dem Entsperrelement 720 und dem Vorschubelement 740 und die Eintreibvorrichtung kann wie gewohnt weiter benutzt werden.

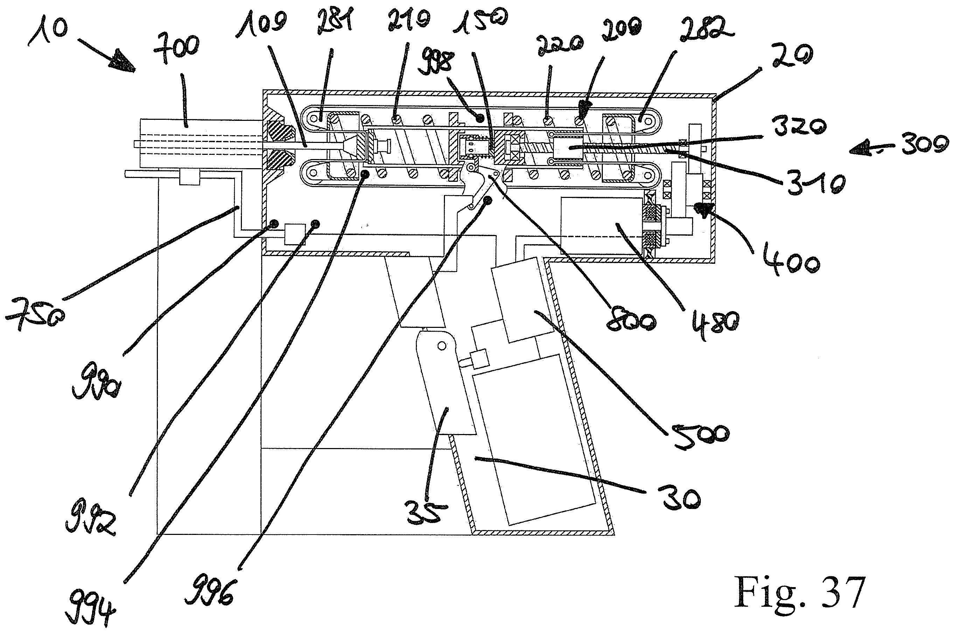

Fig. 37 zeigt eine schematische Ansicht einer Eintreibvorrichtung 10. Die Eintreibvorrichtung 10 umfasst ein Gehäuse 20, in dem ein Kolben 100, eine von einem als Klinke 800 ausgebildeten Halteelement geschlossen gehaltene Kupplungseinrichtung 150, eine Feder 200 mit einem vorderen Federelement 210 und einem hinteren Federelement 220, ein Rollenzug 260 mit einem als Band 270 ausgebildeten Kraftumlenker, einem vorderen Rollenhalter 281 und einem hinteren Rollenhalter 282, ein Spindeltrieb 300 mit einer Spindel 310 und einer Spindelmutter 320, ein Getriebe 400, ein Motor 480 und eine Steuereinrichtung 500 aufgenommen sind.

Die Eintreibvorrichtung 10 weist weiterhin einen Führungskanal 700 für die Befestigungselement und eine Anpresseinrichtung 750 auf. Darüber hinaus weist das Gehäuse 20 einen Griff 30 auf, an welchem ein Handschalter 35 angeordnet ist.

Die Steuereinrichtung 500 kommuniziert mit dem Handschalter 35 sowie mit mehreren Sensoren 990, 992, 994, 996, 998, um den Betriebszustand der Eintreibvorrichtung 10 zu erfassen. Die 990, 992, 994, 996, 998 weisen jeweils eine Hallsonde auf, welche die Bewegung eines nicht dargestellten Magnetankers erfasst, der auf dem jeweils zu erfassenden Element angeordnet, insbesondere befestigt ist.

Mit dem Führungskanalsensor 990 wird eine Bewegung der Anpresseinrichtung 750 nach vorne erfasst, wodurch angezeigt wird, dass der Führungskanal 700 von der Eintreibvorrichtung 10 abgenommen wurde. Mit dem Anpresssensor 992 wird eine Bewegung der Anpresseinrichtung 750 nach hinten erfasst, wodurch angezeigt wird, dass die Eintreibvorrichtung 10 an einen Untergrund angepresst ist. Mit dem Rollenhaltersensor wird eine Bewegung des vorderen Rollenhalters 281 erfasst, wodurch angezeigt wird, ob die Feder 200 gespannt ist. Mit dem Klinkensensor 996 wird eine Bewegung der Klinke 800 erfasst, wodurch angezeigt wird, ob die Kupplungseinrichtung 150 in ihrem geschlossenen Zustand gehalten ist. Mit dem Spindelsensor 998 wird schliesslich erfasst, ob die Spindelmutter 320 beziehungsweise eine an der Spindelmutter 320 befestigte Rückholstange in ihrer hintersten Stellung ist.

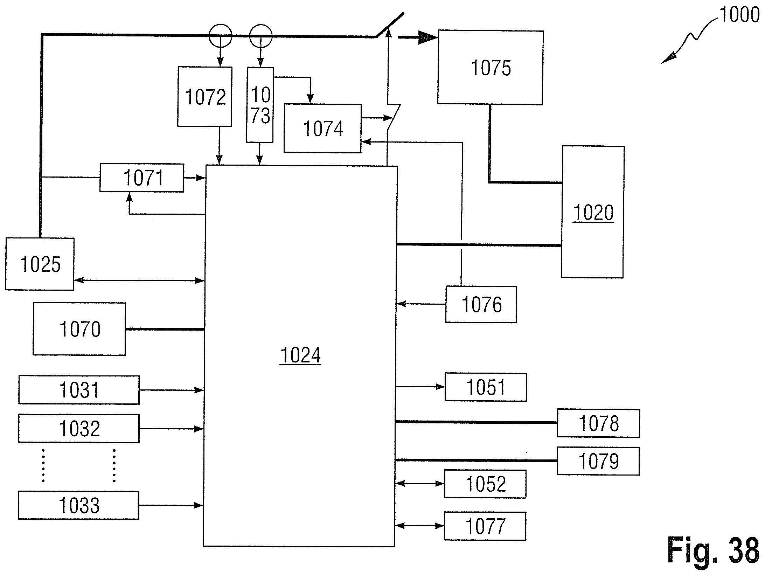

Fig. 38 zeigt einen Steuerungsaufbau der Eintreibvorrichtung vereinfacht dargestellt. Durch ein zentrales Rechteck ist die Steuereinrichtung 1024 angedeutet. Die Schalt- und/oder Sensoreinrichtungen 1031 bis 1033 liefern, wie durch Pfeile angedeutet ist, Informationen oder Signale an die Steuereinrichtung 1024. Ein Hand- oder Hauptschalter 1070 der Eintreibvorrichtung steht mit der Steuereinrichtung 1024 in Verbindung. Durch einen Doppelpfeil ist angedeutet, dass die Steuereinrichtung 1024 mit dem Akku 1025 kommuniziert. Durch weitere Pfeile und ein Rechteck ist eine Selbsthaltung 1071 angedeutet.

Gemäss einem Ausführungsbeispiel detektiert der Handschalter ein Halten durch den Anwender und die Steuerung reagiert auf ein Loslassen des Schalters, indem die gespeicherte Energie abgebaut wird. Somit wird bei unerwarteten Fehlern wie Fallenlassen des Bolzensetzgeräts die Sicherheit erhöht.

Durch weitere Pfeile und Rechtecke 1072 und 1073 sind eine Spannungsmessung und eine Strommessung angedeutet. Durch ein weiteres Rechteck 1074 ist eine Abschaltung angedeutet. Durch ein weiteres Rechteck ist eine B6-Brücke 1075 angedeutet. Dabei handelt es sich um eine 6-Puls-Brückenschaltung mit Halbleiterelementen zur Steuerung des elektrischen Antriebsmotors 1020. Diese wird bevorzugt durch Treiberbausteine angesteuert welche wiederum bevorzugt von einem Controller angesteuert werden. Solche integrierte Treiberbausteine haben neben dem geeigneten Ansteuern der Brücke weiters noch den Vorteil, dass sie bei auftretender Unterspannung die Schaltelemente der B6-Brücke in einen definierten Zustand bringen.

Durch ein weiteres Rechteck 1076 ist ein Temperaturfühler angedeutet, der mit der Abschaltung 1074 und der Steuereinrichtung 1024 kommuniziert. Durch einen weiteren Pfeil ist angedeutet, dass die Steuereinrichtung 1024 Informationen an die Anzeige 1051 ausgibt. Durch weitere Doppelpfeile ist angedeutet, dass die Steuereinrichtung 1024 mit der Schnittstelle 1052 und mit einer weiteren Serviceschnittstelle 1077 kommuniziert.

Bevorzugt wird zum Schutz der Steuerung und/oder des Antriebsmotors neben den Schaltern der B6 Brücke ein weiteres Schaltelement in Serie eingesetzt, welches durch Betriebsdaten wie Überstrom und/oder Übertemperatur durch die Abschaltung 1074 den Leistungszufluss vom Akku zu den Verbrauchern trennt.

Für einen verbesserten und stabilen Betrieb der B6-Brücke ist die Verwendung von Speichern wie Kondensatoren sinnvoll. Damit beim Verbinden von Akku und Steuerung keine Stromspitzen durch die schnelle Ladung von solchen Speicherkomponenten entstehen, was zu einem erhöhten Verschleiss der elektrischen Kontakte führen würde, werden diese Speicher bevorzugt zwischen dem weiteren Schaltelement und der B6-Brücke platziert und nach der Akku-Zuführung über geeignetes Beschalten des weiteren Schaltelements kontrolliert mit Ladung versorgt.

Durch weitere Rechtecke 1078 und 1079 sind ein Lüfter und eine Feststellbremse angedeutet, die durch die Steuereinrichtung 1024 angesteuert werden. Der Lüfter 1078 dient dazu, Komponenten in der Eintreibvorrichtung zur Kühlung mit Kühlluft zu umströmen. Die Feststellbremse 1079 dient dazu, Bewegungen beim Entspannen des Energiespeichers 1010 zu verlangsamen und/oder den Energiespeicher im gespannten beziehungsweise geladenen Zustand zu halten. Die Feststellbremse 1079 kann zu diesem Zweck zum Beispiel mit dem Riementrieb 1018 zusammenwirken.

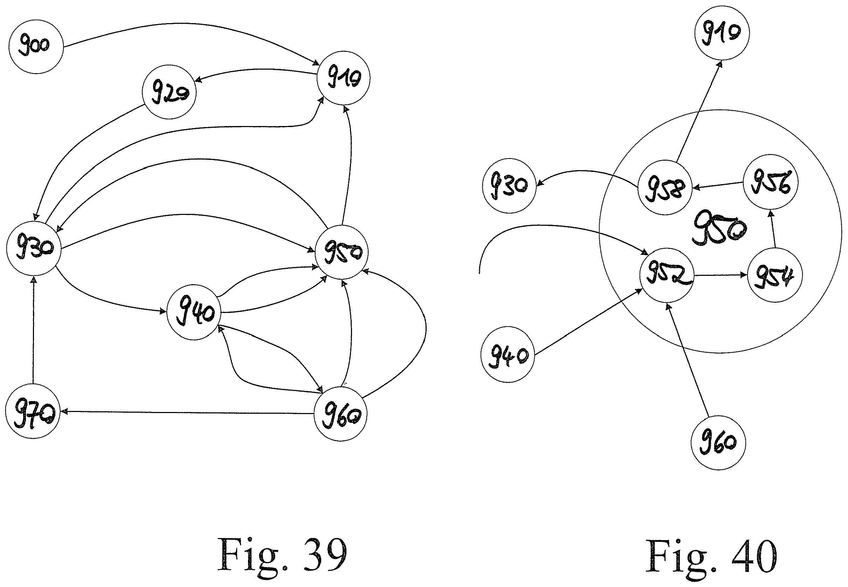

Fig. 39 zeigt den Steuerungsablauf einer Eintreibvorrichtung in Form eines Zustandsdiagrammes, bei dem jeder Kreis einen Gerätezustand oder Betriebsmodus und jeder Pfeil einen Vorgang darstellt, durch den die Eintreibvorrichtung von einem ersten in einen zweiten Gerätezustand beziehungsweise Betriebsmodus gelangt.

Im Gerätezustand "Akku entnommen" 900 ist ein elektrischer Energiespeicher wie zum Beispiel ein Akku aus der Eintreibvorrichtung entnommen. Durch Einsetzen eines elektrischen Energiespeichers in die Eintreibvorrichtung wird die Eintreibvorrichtung in den Gerätezustand "Aus" 910 versetzt. Im Gerätezustand "Aus" 910 ist zwar ein elektrischer Energiespeicher in die Eintreibvorrichtung eingesetzt, die Eintreibvorrichtung ist jedoch immer noch ausgeschaltet. Durch Einschalten mit dem Handschalter 35 aus Fig. 37 wird der Gerätemodus "Reset" 920 erreicht, in dem die Steuerelektronik der Eintreibvorrichtung initialisiert wird. Nach einem Selbsttest geht die Eintreibvorrichtung schliesslich in den Betriebsmodus "Spannen" 930 über, in dem ein mechanischer Energiespeicher der Eintreibvorrichtung gespannt wird.

Wird die Eintreibvorrichtung im Betriebsmodus "Spannen" 930 mit dem Handschalter 35 ausgeschaltet, gelangt die Eintreibvorrichtung bei noch ungespannter Eintreibvorrichtung direkt zurück in den Gerätezustand "Aus" 910. Bei teilweise gespannter Eintreibvorrichtung gelangt die Eintreibvorrichtung dagegen in den Betriebsmodus "Entspannen" 950, in dem der mechanische Energiespeicher der Eintreibvorrichtung entspannt wird. Wird andererseits im Betriebsmodus "Spannen" 930 ein zuvor festgelegter Spannweg erreicht, gelangt die Eintreibvorrichtung in den Gerätezustand "Einsatzbereit" 940. Das Erreichen des Spannwegs wird mit Hilfe des Rollenhaltersensors 994 in Fig. 37 erfasst.

Ausgehend von dem Gerätezustand "Einsatzbereit" 940 gelangt die Eintreibvorrichtung durch Ausschalten des Handschalters 35 oder durch die Feststellung, dass mehr Zeit als eine vorbestimmte Zeit seit dem Erreichen des Gerätezustandes "Einsatzbereit" 940, beispielsweise mehr Zeit als 60 Sekunden vergangen ist, in den Betriebsmodus "Entspannen" 950. Wird die Eintreibvorrichtung dagegen rechtzeitig an einen Untergrund angepresst, geht die Eintreibvorrichtung in den Gerätezustand "Eintreibbereit" 960 über, in dem die Eintreibvorrichtung bereit für einen Eintreibvorgang ist. Das Anpressen wird dabei mit Hilfe des Anpresssensors 992 aus Fig. 37 erfasst.

Ausgehend von dem Gerätezustand "Eintreibbereit" 960 gelangt die Eintreibvorrichtung durch Ausschalten des Handschalters 35 oder durch die Feststellung, dass mehr Zeit als eine vorbestimmte Zeit seit dem Erreichen des Gerätezustandes "Eintreibbereit" 960, beispielsweise mehr Zeit als sechs Sekunden vergangen ist, in den Betriebsmodus "Entspannen" 950 und anschliessend in den Gerätezustand "Aus" 910. Sollte dagegen die Eintreibvorrichtung wieder durch Betätigen des Handschalters 35 eingeschaltet werden, während sie in dem Betriebsmodus "Entspannen" 950 ist, gelangt sie von dem Betriebsmodus "Entspannen" 950 direkt zu dem Betriebsmodus "Spannen" 930. Ausgehend von dem Betriebsmodus "Eintreibbereit" 960 gelangt die Eintreibvorrichtung durch Abheben der Eintreibvorrichtung von dem Untergrund zurück in den Gerätezustand "Einsatzbereit" 950. Das Abheben wird dabei mit Hilfe des Anpresssensors 992 erfasst.

Ausgehend von dem Betriebsmodus "Eintreibbereit" 960 gelangt die Eintreibvorrichtung durch Ziehen des Abzugs in den Betriebsmodus "Eintreiben" 970, in dem ein Befestigungselement in den Untergrund eingetrieben und das Energieübertragungselement in die Ausgangsposition bewegt sowie in die Kupplungseinrichtung eingekuppelt wird. Das Ziehen des Abzugs bewirkt ein Öffnen der Kupplungseinrichtung 150 in Fig. 37 durch Verschwenken der zugehörigen Klinke 800, was mit Hilfe des Klinkensensors 996 erfasst wird. Vom Betriebsmodus "Eintreiben" 970 gelangt die Eintreibvorrichtung, sobald die Eintreibvorrichtung von dem Untergrund abgehoben wird, in den Betriebsmodus "Spannen" 930. Das Abheben wird dabei wiederum mit Hilfe des Anpresssensors 992 erfasst.

Fig. 40 zeigt ein detaillierteres Zustandsdiagramm des Betriebsmodus "Entspannen" 950. Im Betriebsmodus "Entspannen" 950 wird zunächst der Betriebsmodus "Motor stoppen" 952 durchlaufen, in dem eine gegebenenfalls vorliegende Drehung des Motors angehalten wird. Erreicht wird der Betriebsmodus "Motor stoppen" 952 von jedem anderen Betriebsmodus oder Gerätezustand, wenn die Vorrichtung mit dem Handschalter 35 ausgeschaltet wird. Nach einer vorbestimmten Zeitspanne danach wird der Betriebsmodus "Motor bremsen" 954 durchlaufen, in dem der Motor kurzgeschlossen wird und, als Generator arbeitend, den Entspannvorgang bremst. Nach einer weiteren vorbestimmten Zeitspanne wird der Betriebsmodus "Motor antreiben" 956 durchlaufen, in dem der Motor den Entspannvorgang aktiv weiter bremst und/oder den Linearabtrieb in eine vordefinierte Endstellung bringt. Schliesslich wird der Gerätezustand "Entspannen fertig" 958 erreicht.

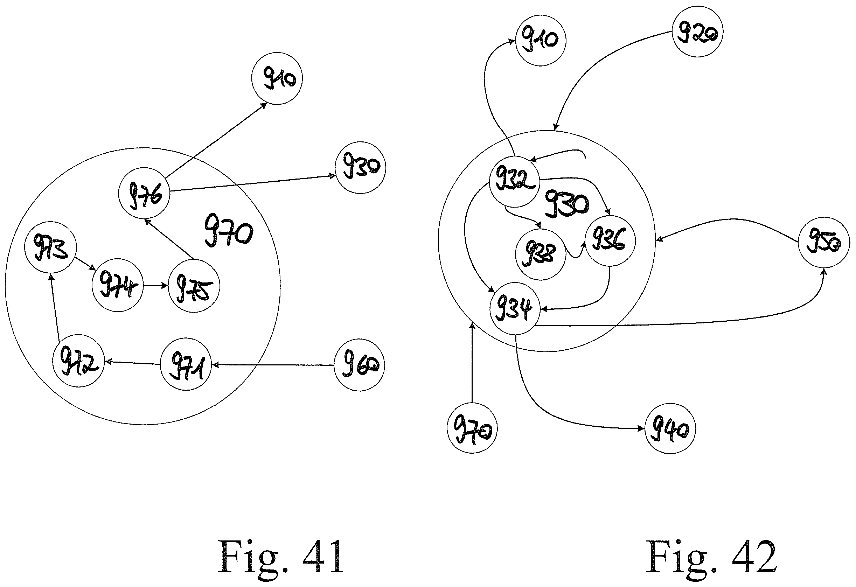

Fig. 41 zeigt ein detaillierteres Zustandsdiagramm des Betriebsmodus "Eintreiben" 970. Im Betriebsmodus "Eintreiben" 970 werden zunächst der Betriebsmodus "Eintreibvorgang abwarten" 971, dann nachdem der Kolben seine Setzposition erreicht hat, der Betriebsmodus "schneller Motorlauf und Halteeinrichtung öffnen" 972, dann der Betriebsmodus "langsamer Motorlauf" 973, dann der Betriebsmodus "Motor stoppen" 974, dann der Betriebsmodus "Kolben einkuppeln" 975 und schliesslich der Betriebsmodus "Motor aus und auf Nagel warten" 976 durchlaufen. Das Erreichen der Kupplung durch den Kolben wird dabei durch einen Spindelsensor 998 aus Fig. 37 erkannt. Schliesslich gelangt die Eintreibvorrichtung von dort aus durch die Feststellung, dass mehr Zeit als eine vorbestimmte Zeit seit dem Erreichen des Betriebsmodus "Motor aus und auf Nagel warten" 976, beispielsweise mehr Zeit als 60 Sekunden vergangen ist, in den Gerätezustand "Aus" 910.

Fig. 42 zeigt ein detaillierteres Zustandsdiagramm des Betriebsmodus "Spannen" 930. Im Betriebsmodus "Spannen" 930 wird zunächst der Betriebsmodus "Initialisierung" 932 durchlaufen, in dem die Steuereinrichtung mit Hilfe des Spindelsensors 998 prüft, ob der Linearabtrieb in seiner hintersten Position ist oder nicht, und mit Hilfe des Klinkensensors 996 prüft, ob das Halteelement die Kupplungseinrichtung geschlossen hält oder nicht. Falls der Linearabtrieb in seiner hintersten Position ist und das Halteelement die Kupplungseinrichtung geschlossen hält, geht die Vorrichtung sofort in den Betriebsmodus "Mechanischen Energiespeicher spannen" 934 über, in dem der mechanische Energiespeicher gespannt wird, da sichergestellt ist, dass das Energieübertragungselement in der Kupplungseinrichtung eingekuppelt ist.

Falls im Betriebsmodus "Initialisierung" 932 festgestellt wird, dass der Linearabtrieb in seiner hintersten Position ist, das Halteelement die Kupplungseinrichtung jedoch nicht geschlossen hält, wird zunächst der Betriebsmodus "Linearabtrieb vorfahren" 938 und nach einer vorbestimmten Zeitspanne der Betriebsmodus "Linearabtrieb zurückfahren" 936 durchlaufen, so dass der Linearabtrieb das Energieübertragungselement nach hinten zur Kupplung befördert und einkuppelt. Sobald die Steuereinrichtung feststellt, dass der Linearabtrieb in seiner hintersten Position ist und das Halteelement die Kupplungseinrichtung geschlossen hält, geht die Vorrichtung in den Betriebsmodus "Mechanischen Energiespeicher spannen" 934 über.

Falls im Betriebsmodus "Initialisierung" 932 festgestellt wird, dass der Linearabtrieb nicht in seiner hintersten Position ist, wird sofort der Betriebsmodus "Linearabtrieb zurückfahren" 936 durchlaufen. Sobald die Steuereinrichtung mit Hilfe des Spindelsensors 998 feststellt, dass der Linearabtrieb in seiner hintersten Position ist und das Halteelement die Kupplungseinrichtung geschlossen hält, geht die Vorrichtung wiederum in den Betriebsmodus "Mechanischen Energiespeicher spannen" 934 über.

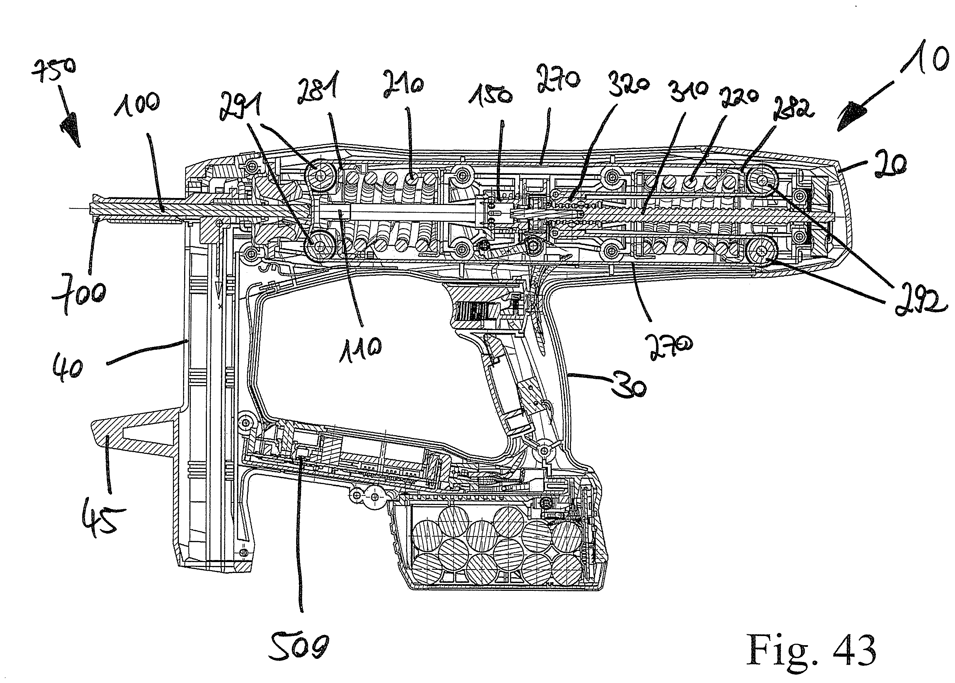

Fig. 43 zeigt einen Längsschnitt der Eintreibvorrichtung 10, nachdem mit Hilfe des Kolbens 100 ein Befestigungselement nach vorne, das heisst in der Zeichnung nach links, in einen Untergrund eingetrieben wurde. Der Kolben befindet sich in seiner Setzposition. Das vordere Federelement 210 und das hintere Federelement 220 befinden sich im entspannten Zustand, in dem sie tatsächlich noch eine gewisse Restspannung aufweisen. Der vordere Rollenhalter 281 ist in seiner im Betriebsablauf vordersten Position und der hintere Rollenhalter 282 ist in seiner im Betriebsablauf hintersten Position. Die Spindelmutter 320 befindet sich am vorderen Ende der Spindel 310. Aufgrund der unter Umständen bis auf eine Restspannung entspannten Federelemente 210, 220 ist das Band 270 im Wesentlichen lastfrei.

Sobald die Steuereinrichtung 500 mittels eines Sensors erkannt hat, dass der Kolben 100 in seiner Setzposition ist, veranlasst die Steuereinrichtung 500 einen Rückholvorgang, bei dem der Kolben 100 in seine Ausgangsposition befördert wird. Hierzu dreht der Motor über das Getriebe 400 die Spindel 310 in einer ersten Drehrichtung, so dass die verdrehgesicherte Spindelmutter 320 nach hinten bewegt wird.

Die Rückholstangen greifen dabei in den Rückholzapfen des Kolbens 100 ein und befördern damit den Kolben 100 ebenfalls nach hinten. Der Kolben 100 nimmt dabei das Band 270 mit, wodurch die Federelemente 210, 220 jedoch nicht gespannt werden, da die Spindelmutter 320 ebenfalls das Band 270 nach hinten mitnimmt und dabei über die hinteren Rollen 292 genauso viel Bandlänge freigibt wie der Kolben zwischen den vorderen Rollen 291 einzieht. Das Band 270 bleibt also während des Rückholvorgangs im Wesentlichen lastfrei.

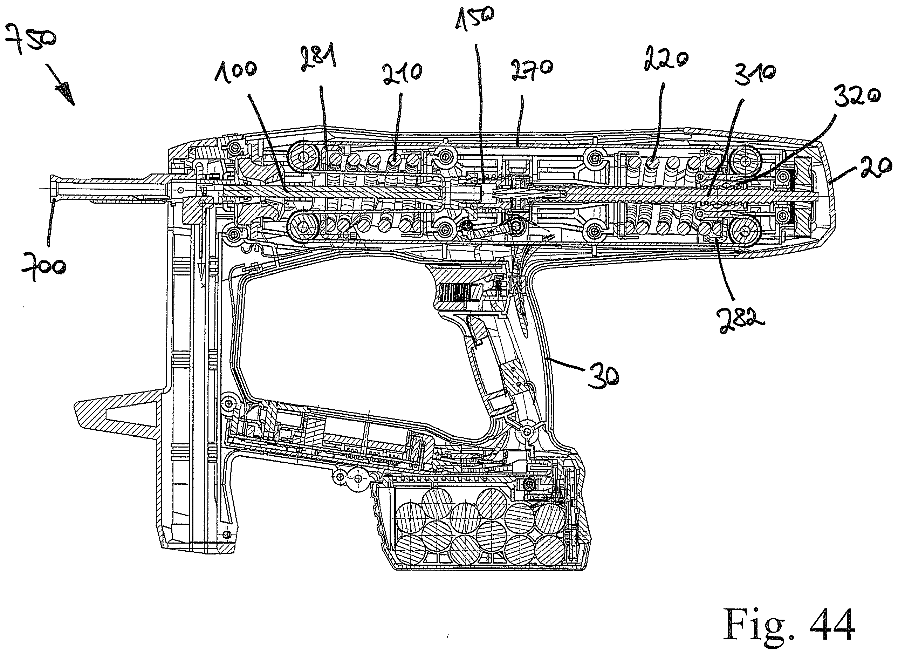

Fig. 44 zeigt einen Längsschnitt der Eintreibvorrichtung 10 nach dem Rückholvorgang. Der Kolben 100 befindet sich in seiner Ausgangsstellung und ist mit seinem Kupplungssteckteil 110 in der Kupplungseinrichtung 150 eingekuppelt. Das vordere Federelement 210 und das hintere Federelement 220 befinden sich weiterhin in ihrem jeweiligen entspannten Zustand, der vordere Rollenhalter 281 ist in seiner vordersten Position und der hintere Rollenhalter 282 ist in seiner hintersten Position. Die Spindelmutter 320 befindet sich am hinteren Ende der Spindel 310. Aufgrund der entspannten Federelemente 210, 220 ist das Band 270 weiterhin im Wesentlichen lastfrei.

Wird die Eintreibvorrichtung nun vom Untergrund abgehoben, so dass die Anpresseinrichtung 750 gegenüber dem Führungskanal 700 nach vorne verschoben wird, veranlasst die Steuereinrichtung 500 einen Spannvorgang, bei dem die Federelemente 210, 220 gespannt werden. Hierzu dreht der Motor über das Getriebe 400 die Spindel 310 in einer zur ersten Drehrichtung entgegen gesetzten zweiten Drehrichtung, so dass die verdrehgesicherte Spindelmutter 320 nach vorne bewegt wird.

Die Kupplungseinrichtung 150 hält dabei das Kupplungssteckteil 110 des Kolbens 100 fest, so dass die Bandlänge, welche von der Spindelmutter 320 zwischen den hinteren Rollen 292 eingezogen wird, nicht von dem Kolben freigegeben werden kann. Die Rollenhalter 281, 282 werden daher aufeinander zu bewegt und die Federelemente 210, 220 werden gespannt.

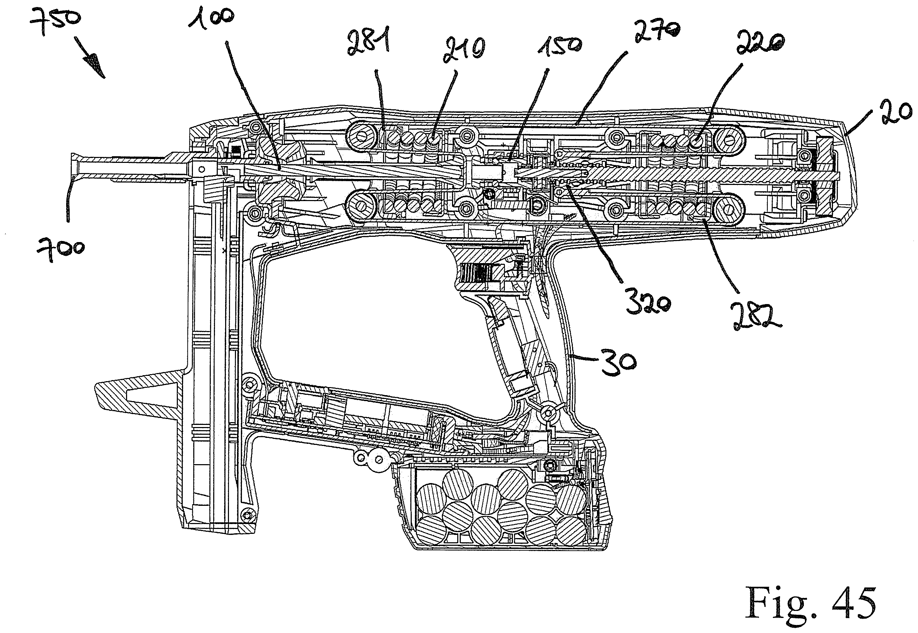

Fig. 45 zeigt einen Längsschnitt der Eintreibvorrichtung 10 nach dem Spannvorgang. Der Kolben 100 befindet sich weiterhin in seiner Ausgangsstellung und ist mit seinem Kupplungssteckteil 110 in der Kupplungseinrichtung 150 eingekuppelt. Das vordere Federelement 210 und das hintere Federelement 220 sind gespannt, der vordere Rollenhalter 281 ist in seiner hintersten Position und der hintere Rollenhalter 282 ist in seiner vordersten Position. Die Spindelmutter 320 befindet sich am vorderen Ende der Spindel 310. Das Band 270 lenkt die Spannkraft der Federelemente 210, 220 an den Rollen 291, 292 um und überträgt die Spannkraft auf den Kolben 100, welcher gegen die Spannkraft von der Kupplungseinrichtung 150 gehalten wird.

Die Eintreibvorrichtung ist jetzt für einen Eintreibvorgang bereit. Sobald ein Benutzer den Abzug 34 zieht, gibt die Kupplungseinrichtung 150 den Kolben 100 frei, welcher dann die Spannenergie der Federelemente 210, 220 auf ein Befestigungselement überträgt und das Befestigungselement in den Untergrund eintreibt.

## Patentansprüche

1. Vorrichtung (10) zum Eintreiben eines Befestigungselementes in einen Untergrund, aufweisend einen mechanischen Energiespeicher (200) zur Speicherung von mechanischer Energie, eine Energieübertragungseinrichtung zur Übertragung von Energie aus einer Energiequelle (590) auf den mechanischen Energiespeicher, wobei die Energieübertragungseinrichtung ein um eine Drehachse drehbares Drehelement umfasst, und eine gegenüber dem Drehelement angeordnete Halteeinrichtung (450), welche dafür vorgesehen ist, eine Haltekraft auf das Drehelement auszuüben, um das Drehelement gegenüber Drehung festzuhalten, **dadurch gekennzeichnet, dass** die Halteeinrichtung elektrisch betätigbare ist.

2. Vorrichtung nach Anspruch 1, wobei die Halteeinrichtung dafür vorgesehen ist, insbesondere in Richtung der Drehachse auf das Drehelement zu bewegt zu werden, um das Drehelement gegenüber Drehung festzuhalten.

3. Vorrichtung nach einem der vorhergehenden Ansprüche, wobei die Halteeinrichtung eine Magnetspule umfasst.

4. Vorrichtung nach einem der vorhergehenden Ansprüche, wobei die Halteeinrichtung bei anliegender elektrischer Spannung eine Haltekraft auf das Drehelement ausübt und bei wegfallender elektrischer Spannung das Drehelement frei gibt.

5. Vorrichtung nach einem der vorhergehenden Ansprüche, wobei die Halteeinrichtung das Drehelement mittels eines Reibschlusses festhält und insbesondere eine Schlingfederkupplung umfasst.

6. Vorrichtung nach einem der vorhergehenden Ansprüche, wobei die Energieübertragungseinrichtung einen Motor mit einem Motorabtrieb umfasst, welcher ununterbrechbar kraftgekoppelt mit dem mechanischen Energiespeicher verbunden ist.

7. Vorrichtung nach einem der vorhergehenden Ansprüche, wobei das Drehelement relativ zum Motorabtrieb drehfest angeordnet ist.

8. Vorrichtung nach einem der vorhergehenden Ansprüche, wobei die Energieübertragungseinrichtung einen Bewegungsumwandler zur Umwandlung einer Drehbewegung in eine Linearbewegung mit einem Drehantrieb und einem Linearabtrieb, eine Drehmomentübertragungseinrichtung zur Übertragung eines Drehmomentes von dem Motorabtrieb auf den Drehantrieb und eine Kraftübertragungseinrichtung zur Übertragung einer Kraft von dem Linearabtrieb auf den Energiespeicher umfasst.

9. Vorrichtung nach einem der vorhergehenden Ansprüche, wobei die Energieübertragungseinrichtung einen Motor mit einem Motorabtrieb umfasst, weicher ununterbrechbar drehmomentgekoppelt mit dem Drehantrieb verbunden ist.

10. Vorrichtung nach einem der vorhergehenden Ansprüche, wobei ein Drehmoment von dem Drehelement auf den Drehantrieb übertragbar ist, und wobei die Drehachse des Drehelementes gegenüber einer Drehachse des Drehantriebs versetzt angeordnet ist.

11. Vorrichtung nach einem der vorhergehenden Ansprüche, weiterhin aufweisend ein Motordämpfungselement, welches geeignet ist, Bewegungsenergie, insbesondere Vibrationsenergie, des Motors und/oder der Halteeinrichtung gegenüber dem mechanischen Energiespeicher zu absorbieren.

12. Vorrichtung nach einem der vorhergehenden Ansprüche, wobei das Motordämpfungselement ein Elastomer umfasst.

13. Vorrichtung nach einem der vorhergehenden Ansprüche, wobei das Motordämpfungselement an der Halteeinrichtung angeordnet ist.

14. Vorrichtung nach einem der vorhergehenden Ansprüche, wobei das Motordämpfungselement insbesondere stoffschlüssig an der Halteeinrichtung befestigt ist.

15. Vorrichtung nach einem der vorhergehenden Ansprüche, wobei der mechanische Energiespeicher dazu vorgesehen ist, potentielle Energie zu speichern.

## Claims

1. Device (10) for driving a fastening element into a substrate, comprising a mechanical energy storage mechanism (200) for storing mechanical energy, an energy-transfer mechanism for transferring energy from an energy source (590) to the mechanical energy storage mechanism, wherein the energy-transfer mechanism includes a rotary element rotatable about an axis of rotation, and a retaining mechanism (450) arranged opposite the rotary element and intended to exert a retaining force on the rotary element in order to fix the rotary element with respect to rotation, **characterised in that** the retaining mechanism can be actuated electrically.

2. Device according to claim 1, wherein the retaining mechanism is intended to be moved towards the rotary element, in particular in the direction of the axis of rotation, in order to fix the rotary element with respect to rotation.

3. Device according to one of the preceding claims, wherein the retaining mechanism includes a magnetic coil.

4. Device according to one of the preceding claims, wherein the retaining mechanism exerts a retaining force on the rotary element when an electrical voltage is applied and releases the rotary element when the electrical voltage is removed.

5. Device according to one of the preceding claims, wherein the retaining mechanism fixes the rotary element by means of frictional contact and, in particular, includes a wrap spring coupling.

6. Device according to one of the preceding claims, wherein the energy-transfer mechanism includes a motor with a motor output connected to the mechanical energy storage mechanism in a continuously force-coupled manner.

7. Device according to one of the preceding claims, wherein the rotary element is arranged in such a manner that it is fixed in rotation relative to the motor output.

8. Device according to one of the preceding claims, wherein the energy-transfer mechanism includes a motion converter for converting a rotary motion into a linear motion with a rotary drive and a linear output, a torque-transfer mechanism for transferring a torque from the motor output to the rotary drive and a force-transfer mechanism for transferring a force from the linear output to the energy-storage mechanism.

9. Device according to one of the preceding claims, wherein the energy-transfer mechanism includes a motor with a motor output connected to the rotary drive in a continuously torque-coupled manner.

10. Device according to one of the preceding claims, wherein a torque can be transferred from the rotary element to the rotary drive and wherein the axis of rotation of the rotary element is arranged in such a manner that it is offset with respect to an axis of rotation of the rotary drive.

11. Device according to one of the preceding claims, further comprising a motor-damping element suitable for absorbing kinetic energy, in particular vibration energy, of the motor and/or of the retaining mechanism with respect to the mechanical energy storage mechanism.

12. Device according to one of the preceding claims, wherein the motor-damping element includes an elastomer.

13. Device according to one of the preceding claims, wherein the motor-damping element is arranged on the retaining mechanism.

14. Device according to one of the preceding claims, wherein the motor-damping element is fastened to the retaining mechanism, in particular by a material bond.

15. Device according to one of the preceding claims, wherein the mechanical energy storage mechanism is intended to store potential energy.

## Revendications

1. Dispositif (10) destiné à enfoncer un élément de fixation dans une surface sous-jacente, comportant un accumulateur d'énergie mécanique (200) pour accumuler de l'énergie mécanique, un dispositif de transfert d'énergie pour transférer de l'énergie provenant d'une source d'énergie (590) à l'accumulateur d'énergie mécanique, dans lequel le dispositif de transfert d'énergie comprend un élément rotatif pouvant tourner autour d'un axe de rotation et un dispositif de retenue (450) agencé en face de l'élément rotatif qui est destiné à exercer une force de retenue sur l'élément rotatif afin de maintenir l'élément rotatif par rapport à la rotation, **caractérisé en ce que** le dispositif de retenue peut être actionné électriquement.

2. Dispositif selon la revendication 1, dans lequel le dispositif de retenue est destiné à être déplacé, en particulier en direction de l'axe de rotation, sur l'élément rotatif, afin de maintenir l'élément rotatif par rapport à la rotation.

3. Dispositif selon l'une des revendications précédentes, dans lequel le dispositif de retenue comprend une bobine magnétique.

4. Dispositif selon l'une des revendications précédentes, dans lequel le dispositif de retenue exerce une force de retenue sur l'élément rotatif lorsqu'une tension électrique est appliquée et libère l'élément rotatif lorsque l'application de la tension électrique cesse.

5. Dispositif selon l'une des revendications précédentes, dans lequel le dispositif de retenue maintient l'élément rotatif au moyen d'un contact de frottement et comprend en particulier un accouplement par ressort enroulé.

6. Dispositif selon l'une des revendications précédentes, dans lequel le dispositif de transfert d'énergie comprend un moteur avec une sortie de moteur qui est reliée à l'accumulateur d'énergie mécanique de manière ininterruptible et par couplage dynamique.

7. Dispositif selon l'une des revendications précédentes, dans lequel l'élément rotatif est agencé de manière non rotative par rapport à la sortie de moteur.

8. Dispositif selon l'une des revendications précédentes, dans lequel le dispositif de transfert d'énergie comprend un convertisseur de mouvement pour convertir un mouvement de rotation en un mouvement linéaire avec un mécanisme d'entraînement en rotation et une sortie linéaire, un dispositif de transfert de couple pour transférer un couple de la sortie de moteur au mécanisme d'entraînement en rotation et un dispositif de transfert de force pour transférer une force de la sortie linéaire à l'accumulateur énergie.

9. Dispositif selon l'une des revendications précédentes, dans lequel le dispositif de transfert d'énergie comprend un moteur avec une sortie de moteur qui est reliée au mécanisme d'entraînement en rotation de manière ininterruptible et par transfert de couple.

10. Dispositif selon l'une des revendications précédentes, dans lequel un couple peut être transmis de l'élément rotatif au mécanisme d'entraînement en rotation, et dans lequel l'axe de rotation de l'élément rotatif est agencé de manière décalée par rapport à un axe de rotation du mécanisme d'entraînement en rotation.

11. Dispositif selon l'une des revendications précédentes, comportant en outre un élément d'amortissement de moteur qui est adapté pour absorber de l'énergie cinétique, en particulier de l'énergie vibratoire, du moteur et/ou du dispositif de retenue par rapport à l'accumulateur d'énergie mécanique.

12. Dispositif selon l'une des revendications précédentes, dans lequel l'élément d'amortissement de moteur comprend un élastomère.

13. Dispositif selon l'une des revendications précédentes, dans lequel l'élément d'amortissement de moteur est agencé sur le dispositif de retenue.

14. Dispositif selon l'une des revendications précédentes, dans lequel l'élément d'amortissement de moteur est fixé, en particulier d'un seul tenant, sur le dispositif de retenue.

15. Dispositif selon l'une des revendications précédentes, dans lequel l'accumulateur d'énergie mécanique est prévu pour emmagasiner de l'énergie potentielle.
